# EUROPEAN PATENT APPLICATION

(11) **EP 3 745 755 A1**
(43) Date of publication of application: **02.12.2020**
(21) Application number: 19754286.3
(22) Date of filing: 25.01.2019
(51) Int. Cl.: H04W 12/04, H04L 12/43, H04W 36/08

(54) **COMMUNICATION METHOD AND APPARATUS**

(30) Priority: 13.02.2018 CN 201810149663
(71) Applicant: Huawei Technologies Co. Ltd., Guangdong 518129 (CN)
(72) Inventor: YING, Jiangwei, Shenzhen, Guangdong 518129 (CN); YU, Feng, Shenzhen, Guangdong 518129 (CN); LIN, Bo, Shenzhen, Guangdong 518129 (CN)
(74) Representative: Gill Jennings & Every LLP
(86) International application number: PCT/CN2019/073227
(87) International publication number: WO 2019/157930

(57) **Abstract**

This application discloses a communications method and apparatus. The method includes: receiving, by a terminal, a first system information block from a base station, where the first system information block includes encrypted time information, and the time information is used for synchronization of terminals in a key area in which the terminal is located; and decrypting, by the terminal, the encrypted time information based on a key of the key area in which the terminal is located. This application further discloses a corresponding apparatus. Abase station uses a system information block to carry encrypted time information, and a terminal decrypts the encrypted time information based on a key of a key area in which the terminal is located, to implement secure transmission of the time information.

## Description

This application claims priority to Chinese Patent Application No. 201810149663.8, filed with the Chinese Patent Office on February 13, 2018 and entitled "COMMUNICATIONS METHOD AND APPARATUS", which is incorporated herein by reference in its entirety.

### TECHNICAL FIELD

This application relates to the field of communications technologies, and in particular, to a communications method and apparatus.

### BACKGROUND

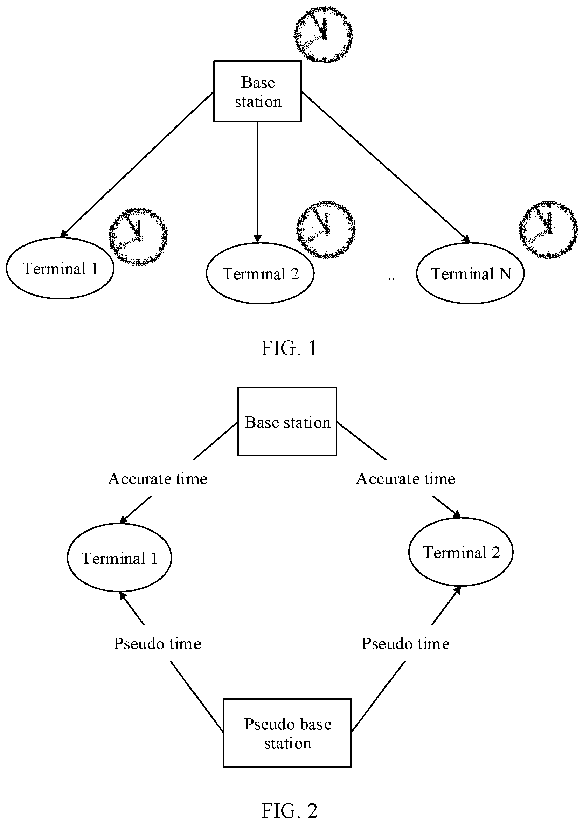

In some industrial communication scenarios of the 4th generation (4th generation, 4G) mobile communication or the 5th generation (5th generation, 5G) mobile communication, time synchronization is required between terminals. To implement synchronization between terminals, as shown in FIG. 1, in the prior art, a base station is used as a time synchronization source for the terminals and broadcasts time information used for synchronization between the terminals, so that all terminals in a serving area of the base station keep synchronization with the base station, to implement synchronization between the terminals.

In the prior art, there is a security threat to the time information. For example, the time information may be forged by an attacker. As shown in FIG. 2, a pseudo base station broadcasts pseudo time information, causing asynchronization between the terminals. For example, in an industrial control scenario, time synchronization needs to be kept between two terminals, namely, a controller and an executor, so that the controller sends control signaling to the executor, and the executor executes a command at an accurate time. If the executor is not synchronized with the controller, the executor executes the command at an incorrect time. Consequently, a task fails to be performed, and the executor may conflict with another executor.

### SUMMARY

This application provides a communications method and apparatus, to implement secure transmission of time information.

According to a first aspect, a communications method is provided, and includes: receiving, by a terminal, a first system information block from a first base station, where the first system information block includes encrypted time information, and the time information is used for synchronization of terminals in a key area in which the terminal is located; and decrypting, by the terminal, the encrypted time information based on a key of the key area in which the terminal is located. In this aspect, the base station uses the system information block to carry the encrypted time information, and the terminal decrypts the encrypted time information based on the key of the key area in which the terminal is located, to implement secure transmission of the time information.

With reference to the first aspect, in a first possible implementation of the first aspect, the method further includes: obtaining, by the terminal, the key of the key area in which the terminal is located.

With reference to the first possible implementation of the first aspect, in a second possible implementation of the first aspect, the obtaining, by the terminal, the key of the key area in which the terminal is located includes: obtaining, by the terminal based on the first system information block, the key of the key area in which the terminal is located; or obtaining, by the terminal, a key of a second key area when the terminal moves from a first key area to the second key area; or receiving, by the terminal from the first base station, a second system information block that carries key-related information, and obtaining, based on the key-related information, the key of the key area in which the terminal is located. In this implementation, after receiving the first system information block, the terminal may obtain the key of the key area in which the terminal is located. During an update of the key area, the terminal re-obtains the key of the key area in which the terminal is located; and the terminal may further obtain, based on the key-related information, the key of the key area in which the terminal is located.

With reference to the second possible implementation of the first aspect, in a third possible implementation of the first aspect, the obtaining, by the terminal based on the first system information block, the key of the key area in which the terminal is located includes: when the first system information block further includes key-related information, and the terminal stores a key corresponding to the key-related information, obtaining, by the terminal, the stored key corresponding to the key-related information; or when the first system information block further includes key-related information, and the terminal does not store a key corresponding to the key-related information, obtaining, by the terminal, the key of the key area in which the terminal is located; or when the terminal fails to decrypt the encrypted time information based on a key stored in the terminal, obtaining, by the terminal, the key of the key area in which the terminal is located. In this implementation, the terminal determines, based on the key-related information, whether the terminal stores the key corresponding to the key-related information; obtains, based on the key-related information, the key of the key area in which the terminal is located; and determines, based on the key-related information, whether the stored key can be used to decrypt the encrypted time information.

With reference to the third possible implementation of the first aspect, in a fourth possible implementation of the first aspect, the obtaining, by the terminal, the key of the key area in which the terminal is located includes: sending, by the terminal, a non-access stratum request message to a mobility management network element, and receiving a non-access stratum response message from the mobility management network element, where the non-access stratum response message includes the key; or sending, by the terminal, a first radio resource control RRC message to the base station, and receiving a second RRC message from the base station, where the second RRC message includes the key. In this implementation, when initially accessing a network or performing cell reselection, the terminal may obtain, from the mobility management network element by using the NAS request message, the key of the key area in which the terminal is located, or may obtain, from the base station by using the RRC message, the key of the key area in which the terminal is located.

With reference to the third possible implementation of the first aspect, in a fifth possible implementation of the first aspect, the obtaining, by the terminal, the key of the key area in which the terminal is located includes: sending, by the terminal, an RRC connection setup request message to the base station, where the RRC connection setup request message includes a non-access stratum request message; and receiving, by the terminal, an RRC connection reconfiguration message from the base station, where the RRC connection reconfiguration message includes the key, or the RRC connection reconfiguration message includes a non-access stratum response message, and the non-access stratum response message includes the key.

With reference to the third possible implementation of the first aspect, in a sixth possible implementation of the first aspect, the obtaining, by the terminal, the key of the key area in which the terminal is located includes: sending, by the terminal, an RRC request message to the base station, where the RRC request message does not include a non-access stratum request message, and receiving an RRC response message from the base station, where the RRC response message includes the key.

With reference to the second possible implementation of the first aspect, in a seventh possible implementation of the first aspect, the obtaining, by the terminal, a key of a second key area when the terminal moves from a first key area to the second key area includes: obtaining, by the terminal, a key of the second key area when the terminal reselects a cell in the second key area from a cell in the first key area; or obtaining, by the terminal, a key of the second key area when the terminal is handed over from a source base station in the first key area to a target base station in the second key area; or obtaining, by the terminal, a key of the second key area when the terminal moves from a radio access network-based notification area RNAin the first key area to an RNA in the second key area. In this implementation, during cell reselection, a base station handover, or an RNA change, the terminal re-obtains the key of the key area in which the terminal is located.

With reference to the seventh possible implementation of the first aspect, in an eighth possible implementation of the first aspect, the obtaining, by the terminal, a key of the second key area when the terminal reselects a cell in the second key area from a cell in the first key area includes: sending, by the terminal, a non-access stratum request message to a mobility management network element, and receiving a non-access stratum response message from the mobility management network element, where the non-access stratum response message includes the key of the second key area; or sending, by the terminal, a first RRC message to a second base station corresponding to the cell in the second key area, and receiving a second RRC message from the second base station, where the second RRC message includes the key of the second key area.

With reference to the seventh possible implementation of the first aspect, in a ninth possible implementation of the first aspect, the terminal is in a connected state, and the obtaining, by the terminal, a key of the second key area when the terminal is handed over from a source base station in the first key area to a target base station in the second key area includes: receiving, by the terminal, an RRC message from the source base station, where the RRC message includes the key of the second key area.

With reference to the seventh possible implementation of the first aspect, in a tenth possible implementation of the first aspect, the terminal is in an inactive state, and the obtaining, by the terminal, a key of the second key area when the terminal moves from an RNA in the first key area to an RNA in the second key area includes: when the terminal moves from the RNA in the first key area to a third base station in the RNA in the second key area, sending, by the terminal, an RRC connection resume request message to the third base station; and receiving, by the terminal, an RRC connection release message from the third base station, where the RRC connection release message includes the key of the second key area.

With reference to any one of the first aspect, or the first possible implementation of the first aspect to the tenth possible implementation of the first aspect, in an eleventh possible implementation of the first aspect, the first system information block is a system information block signed by using a certificate, and the method further includes: receiving, by the terminal, the certificate from the mobility management network element or the first base station; and verifying, by the terminal, a signature of the first system information block by using the certificate. In this implementation, the first system information block is signed by using the certificate. The terminal verifies the signed first system information block, so that secure transmission of the time information can be further ensured.

With reference to any one of the first aspect, or the first possible implementation of the first aspect to the eleventh possible implementation of the first aspect, in a twelfth possible implementation of the first aspect, the method further includes: receiving, by the terminal, a third system information block from the first base station, where the third system information block includes indication information, and the indication information indicates the first system information block used to carry the encrypted time information; and obtaining, by the terminal, the encrypted time information based on the first system information block indicated by the indication information. In this implementation, the indication information may be sent in advance to indicate, to the terminal, the system information block that carries the encrypted time information. In this way, the terminal can accurately obtain the encrypted time information from the system information block.

With reference to any one of the first aspect, or the first possible implementation of the first aspect to the twelfth possible implementation of the first aspect, in a thirteenth possible implementation of the first aspect, the method further includes: receiving, by the terminal, a key of a neighboring key area of the key area in which the terminal is located. In this implementation, the terminal pre-obtains the key of the neighboring key area, so that during the cell reselection, the base station handover, or the RNA change, the terminal can directly obtain the key stored in the terminal, to decrypt the time information.

According to a second aspect, a communications method is provided, and includes: obtaining, by a first base station, encrypted time information based on time information and a key of a key area in which the first base station is located, where the time information is used for synchronization of terminals in the key area; and sending, by the first base station, a first system information block, where the first system information block includes the encrypted time information. In this aspect, the base station uses the system information block to carry the encrypted time information, and a terminal decrypts the encrypted time information based on a key of a key area in which the terminal is located, to implement secure transmission of the time information.

With reference to the second aspect, in a first possible implementation of the second aspect, the method further includes: sending, by the first base station, the key to a terminal.

With reference to the first possible implementation of the second aspect, in a second possible implementation of the second aspect, the sending, by the first base station, the key to a terminal includes: receiving, by the first base station, authorization indication information from a mobility management network element, where the authorization indication information is used to indicate that the terminal is authorized to use a time synchronization service; and sending, by the first base station, the key to the terminal based on the authorization indication information. In this implementation, the base station sends the key to the terminal based on the authorization indication of the mobility management network element, and the terminal authorized to use the time synchronization service may obtain the key, to decrypt received time information, so as to effectively manage the terminal using the time synchronization service.

With reference to the first possible implementation of the second aspect, in a third possible implementation of the second aspect, the first base station is a target base station in a second key area, the terminal is handed over from a source base station in a first key area to the target base station, and the sending, by the first base station, the key to a terminal includes: receiving, by the first base station, a handover request message from the source base station, and sending a handover command to the source base station, where the handover command includes the key, and the key is a key of the second key area; or receiving, by the first base station, a handover request message from a mobility management network element, and sending a handover request response message to the mobility management network element, where the handover request response message includes the key, and the key is a key of the second key area. In this implementation, the key area changes with a base station handover. The terminal re-obtains a key of a key area in which the terminal is located.

With reference to the first possible implementation of the second aspect, in a fourth possible implementation of the second aspect, the terminal moves from a radio access network-based notification area RNA in a first key area to the first base station in an RNA in a second key area, and the sending, by the first base station, the key to a terminal includes: receiving, by the first base station, an RRC connection resume request message from the terminal; and sending, by the first base station, an RRC connection release message to the terminal based on the RRC connection resume request message, where the RRC connection release message includes the key, and the key is a key of the second key area. In this implementation, the key area changes with an RNA update. The terminal re-obtains a key of a key area in which the terminal is located.

With reference to any one of the second aspect, or the first possible implementation of the second aspect to the fourth possible implementation of the second aspect, in a fifth possible implementation of the second aspect, the method further includes: receiving, by the first base station, a certificate from an operation, administration, and maintenance entity or the mobility management network element; and signing, by the first base station, the first system information block by using the certificate. In this implementation, the first system information block is signed by using the certificate. The terminal verifies the signed first system information block, so that secure transmission of the time information can be further ensured.

With reference to any one of the second aspect, or the first possible implementation of the second aspect to the fifth possible implementation of the second aspect, in a sixth possible implementation of the second aspect, the method further includes: sending, by the first base station, a second system information block, where the second system information block includes indication information, and the indication information indicates the first system information block used to carry the encrypted time information; or sending, by the first base station, a third system information block, where the third system information block includes key-related information, and the key-related information is used to obtain the key. In this implementation, the indication information may be sent in advance to indicate, to the terminal, the system information block that carries the encrypted time information. In this way, the terminal can accurately obtain the encrypted time information from the system information block. The base station sends the key-related information, and the terminal may obtain, based on the key-related information, a key of a key area in which the terminal is located.

With reference to any one of the second aspect, or the first possible implementation of the second aspect to the sixth possible implementation of the second aspect, in a seventh possible implementation of the second aspect, the method further includes: receiving, by the first base station from the mobility management network element, a neighboring base station, or the operation, administration, and maintenance entity, a key of a neighboring key area of the key area in which the first base station is located; and sending, by the first base station, the key of the neighboring key area. In this implementation, the base station sends the key of the neighboring key area to the terminal in advance, so that during the cell reselection, the base station handover, or the RNA change, the terminal can directly obtain a key stored in the terminal, to decrypt time information.

With reference to any one of the second aspect or the first possible implementation of the second aspect to the seventh possible implementation of the second aspect, in an eighth possible implementation of the second aspect, the method further includes:
receiving, by the first base station, the key from a security function entity, the operation, administration, and maintenance entity, or the mobility management network element.

According to a third aspect, a communications method is provided, and includes: receiving, by a mobility management network element, a non-access stratum request message from a terminal; sending, by the mobility management network element, a non-access stratum response message to the terminal, where the non-access stratum response message includes a key of a key area in which the terminal is located. In this aspect, the mobility management network element sends the key of the key area in which the terminal is located to the terminal, and the terminal decrypts received encrypted time information based on the obtained key, to implement secure transmission of the time information.

With reference to the third aspect, in a first possible implementation of the third aspect, the method further includes: obtaining, by the mobility management network element, subscription information of the terminal based on the non-access stratum request message; and when the mobility management network element determines, based on the subscription information, that the terminal is authorized to use a time synchronization service, encapsulating, by the mobility management network element, the key of the key area in which the terminal is located in the non-access stratum response message. In this implementation, the mobility management network element sends the key to the terminal based on the subscription information of the terminal, and the terminal authorized to use the time synchronization service may obtain the key, to decrypt received time information, so as to effectively manage the terminal using the time synchronization service.

With reference to the third aspect or the first possible implementation of the third aspect, in a second possible implementation of the third aspect, the method further includes: receiving, by the mobility management network element, the key from a first base station or an operation, administration, and maintenance entity.

According to a fourth aspect, a communications method is provided, and includes: receiving, by a mobility management network element, a non-access stratum request message from a terminal; obtaining, by the mobility management network element, subscription information of the terminal based on the non-access stratum request message; and when determining, based on the subscription information, that the terminal is authorized to use a time synchronization service, sending, by the mobility management network element, authorization indication information to a first base station, where the authorization indication information is used to indicate that the terminal is authorized to use the time synchronization service. In this aspect, the mobility management network element sends the key to the terminal based on the subscription information of the terminal, and the terminal authorized to use the time synchronization service may obtain the key, to decrypt received time information, so as to effectively manage the terminal using the time synchronization service.

According to a fifth aspect, a communications method is provided, and includes: receiving, by a mobility management network element, a handover request message from a source base station; sending, by the mobility management network element, the handover request message to a target base station; receiving, by the mobility management network element, a handover request response message from the target base station, where the handover request response message includes a key of a key area in which the target base station is located; and sending, by the mobility management network element, a handover command message to the source base station, where the handover command message includes the key of the key area in which the target base station is located. In this implementation, the key area changes with a base station handover. The terminal re-obtains a key of a key area in which the terminal is located.

According to a sixth aspect, a communications method is provided, and includes: obtaining, by a source base station, a key of a key area in which a target base station is located; and sending, by the source base station, the key of the key area in which the target base station is located to a terminal. In this aspect, the key area changes with a base station handover. The terminal re-obtains a key of a key area in which the terminal is located.

With reference to the sixth aspect, in a first possible implementation of the sixth aspect, the obtaining, by a source base station, a key of a key area in which a target base station is located includes: sending, by the source base station, a handover request message to the target base station; and receiving, by the source base station, a handover command from the target base station, where the handover command includes the key of the key area in which the target base station is located.

With reference to the sixth aspect, in a second possible implementation of the sixth aspect, the obtaining, by a source base station, a key of a key area in which a target base station is located includes: sending, by the source base station, a handover request message to a mobility management network element; and receiving, by the source base station, a handover command from the mobility management network element, where the handover command includes the key of the key area in which the target base station is located.

With reference to the sixth aspect, or the first possible implementation of the sixth aspect, or the second possible implementation of the sixth aspect, in a third possible implementation of the sixth aspect, the method further includes: receiving, by the source base station, a key of a neighboring key area of the key area in which the target base station is located; and sending, by the source base station, the key of the neighboring key area of the key area in which the target base station is located to the terminal. In this implementation, the base station sends the key of the neighboring key area to the terminal in advance, so that during the cell reselection, the base station handover, or the RNA change, the terminal can directly obtain a key stored in the terminal, to decrypt time information.

According to a seventh aspect, a communications apparatus is provided, and includes a processor. The processor is coupled to a memory, the memory is configured to store a program, and the processor invokes the program stored in the memory, to perform the method according to the first aspect. The communications apparatus may be a terminal, or may be at least one processing element or chip.

According to an eighth aspect, a communications apparatus is provided, and includes a processor. The processor is coupled to a memory, the memory is configured to store a program, and the processor invokes the program stored in the memory, to perform the method according to the second aspect. The communications apparatus may be a first base station, or may be at least one processing element or chip.

According to a ninth aspect, a communications apparatus is provided, and includes a processor. The processor is coupled to a memory, the memory is configured to store a program, and the processor invokes the program stored in the memory, to perform the method according to any one of the third aspect to the fifth aspect. The communications apparatus may be a mobility management network element, or may be at least one processing element or chip.

According to a tenth aspect, a communications apparatus is provided, and includes a processor. The processor is coupled to a memory, the memory is configured to store a program, and the processor invokes the program stored in the memory, to perform the method according to the sixth aspect. The communications apparatus may be a source base station, or may be at least one processing element or chip.

According to an eleventh aspect, a communications apparatus is provided, and includes a unit or means (means) configured to perform steps in the method according to the first aspect. The communications apparatus may be a terminal, or may be at least one processing element or chip.

According to a twelfth aspect, a communications apparatus is provided, and includes a unit or means (means) configured to perform steps in the method according to the second aspect. The communications apparatus may be a first base station, or may be at least one processing element or chip.

According to a thirteenth aspect, a communications apparatus is provided, and includes a unit or means (means) configured to perform steps in the method according to any one of the third aspect to the fifth aspect. The communications apparatus may be a mobility management network element, or may be at least one processing element or chip.

According to a fourteenth aspect, a communications apparatus is provided, and includes a unit or means (means) configured to perform steps in the method according to the sixth aspect. The communications apparatus may be a source base station, or may be at least one processing element or chip.

According to a fifteenth aspect, a computer readable storage medium is provided. The computer readable storage medium stores an instruction, and when the instruction is run on a computer, the computer is enabled to perform the methods according to the foregoing aspects.

According to a sixteenth aspect, a program is provided. When being executed by a processor, the program is used to perform the method according to any one of the first aspect to the sixth aspect or the possible implementations of any one of the first aspect to the sixth aspect.

### BRIEF DESCRIPTION OF DRAWINGS

To describe the technical solutions in the embodiments of this application or in the background more clearly, the following describes the accompanying drawings required for describing the embodiments of this application or the background.
FIG. 1 is a schematic diagram of synchronization between terminals by using a base station;
FIG. 2 is a schematic diagram in which a pseudo base station sends pseudo time information;
FIG. 3 is a schematic diagram of a communications system according to an embodiment of this application;
FIG. 4a is a schematic architectural diagram of a 4G communications system;
FIG. 4b is a schematic architectural diagram of a 5G communications system;
FIG. 5 is a schematic interaction flowchart of a communications method according to an embodiment of this application;
FIG. 6 is a schematic interaction flowchart of an example communications method according to an embodiment of this application;
FIG. 7a is a schematic interaction flowchart of another example communications method according to an embodiment of this application;
FIG. 7b is a schematic interaction flowchart of still another example communications method according to an embodiment of this application;
FIG. 8 is a schematic interaction flowchart of still another example communications method according to an embodiment of this application;
FIG. 9 is a schematic interaction flowchart of still another example communications method according to an embodiment of this application;
FIG. 10 is a schematic interaction flowchart of still another example communications method according to an embodiment of this application;
FIG. 11 is a schematic interaction flowchart of still another example communications method according to an embodiment of this application;
FIG. 12 is a schematic structural diagram of modules of a communications apparatus according to an embodiment of this application;
FIG. 13 is a schematic structural diagram of modules of another communications apparatus according to an embodiment of this application;
FIG. 14 is a schematic structural diagram of modules of still another communications apparatus according to an embodiment of this application;
FIG. 15 is a schematic structural diagram of modules of still another communications apparatus according to an embodiment of this application;
FIG. 16 is a schematic structural diagram of a module of still another communications apparatus according to an embodiment of this application;
FIG. 17 is a schematic structural diagram of modules of still another communications apparatus according to an embodiment of this application;
FIG. 18 is a schematic structural diagram of hardware of a communications apparatus according to an embodiment of this application;
FIG. 19 is a schematic structural diagram of hardware of another communications apparatus according to an embodiment of this application; and
FIG. 20 is a schematic structural diagram of hardware of still another communications apparatus according to an embodiment of this application.

### DESCRIPTION OF EMBODIMENTS

The following describes the embodiments of this application with reference to the accompanying drawings in the embodiments of this application.

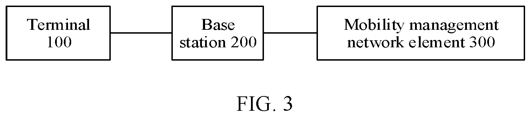

A communications method and apparatus provided in the embodiments of this application may be applied to a communications system shown in FIG. 3. As shown in FIG. 3, the communications system may include a terminal 100, a base station 200, and a mobility management network element 300. The terminal 100 may communicate with the base station 200, and the terminal 100 may further communicate with the mobility management network element 300 through the base station 200.

The mobility management network element 300 may be configured to perform access management on the terminal, for example, a mobility management function entity (mobility management entity, MME) in a 4G communications system, or a mobility management function (access and mobility management function, AMF) entity in a 5G communications system.

The base station 200 may be configured to: manage a radio resource, and provide an access service for the terminal. The base station 200 may be an access network (access network, AN) device or a radio access network (radio access network, RAN) device in the 4G or 5G communications system, for example, an NG-RAN in the 5G communications system or an evolved NodeB (evolved NodeB, eNB) in the 4G communications system.

The terminal 100 is a device with a wireless receiving/sending function. The terminal 100 may be deployed on land, and may include an indoor or outdoor device, a handheld device, a wearable device, or a vehicle-mounted device; or may be deployed on a water surface (for example, a ship); or may be deployed in the air (for example, an airplane, a balloon, or a satellite). The terminal may be a mobile phone (mobile phone), a tablet computer (Pad), a computer with a wireless receiving/sending function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. Sometimes, the terminal may also be referred to as user equipment (user equipment, UE), an access terminal, a UE unit, a UE station, a mobile station, a mobile console, a remote station, a remote terminal, a mobile device, a UE terminal, a wireless communications device, a UE agent, a UE apparatus, or the like.

It should be noted that the mobility management network element is only a name, and the name does not constitute a limitation on the entity. For example, the mobility management network element may also be replaced with a "mobility management function" or have another name.

In addition, the mobility management network element may be an independent physical device, or may be a function module on a physical device. This is not limited.

In the embodiments of this application, the base station 200 uses a system information block to carry encrypted time information, and the terminal 100 decrypts the encrypted time information based on a key of a key area in which the terminal is located, to implement secure transmission of the time information. The time information may be used for synchronization of terminals in a key area in which the base station is located. For example, the time information may be a specific moment value.

The key area may be divided at a plurality of granularities, and may be divided at a granularity of a base station, a control unit (control unit, CU), a tracking area (tracking area, TA), a public land mobile network (public land mobile network, PLMN), or the like.

For example, assuming that the key area is divided at a granularity of the base station, the key area in which the base station is located may be a signal coverage area of the base station, that is, a signal coverage area of all cells of the base station. In this case, keys of different base stations may be different or the same. Assuming that the key area is divided at a granularity greater than the base station, for example, the TA, the key area in which the base station is located may be a TA in which the base station is located. In this case, keys of all base stations in the TAmay be the same.

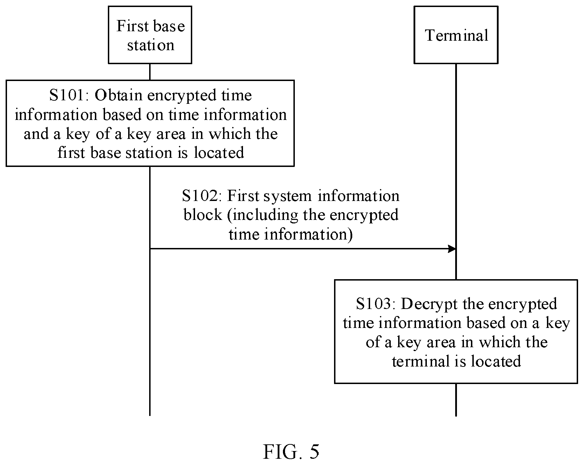

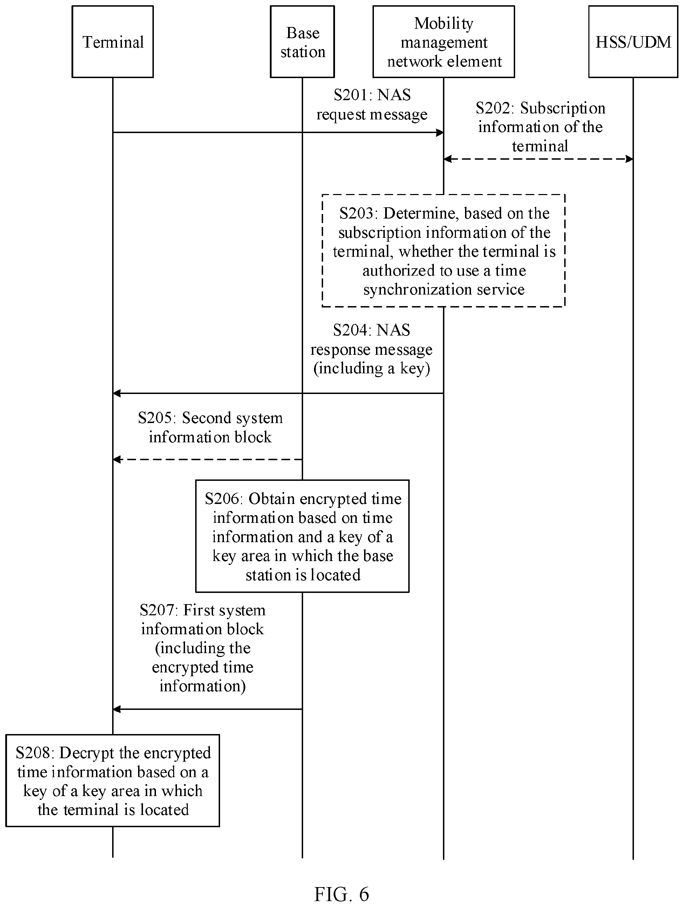

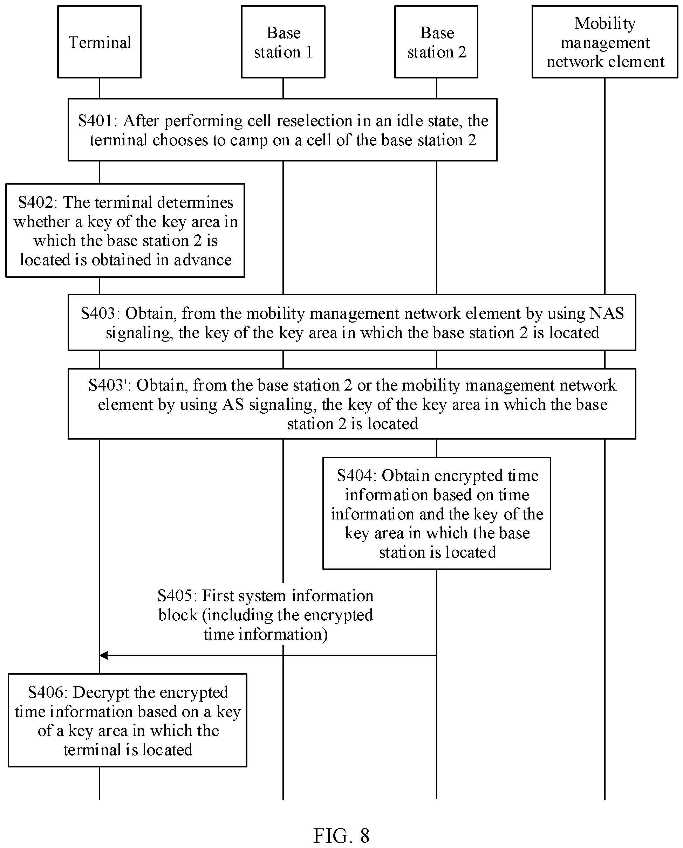

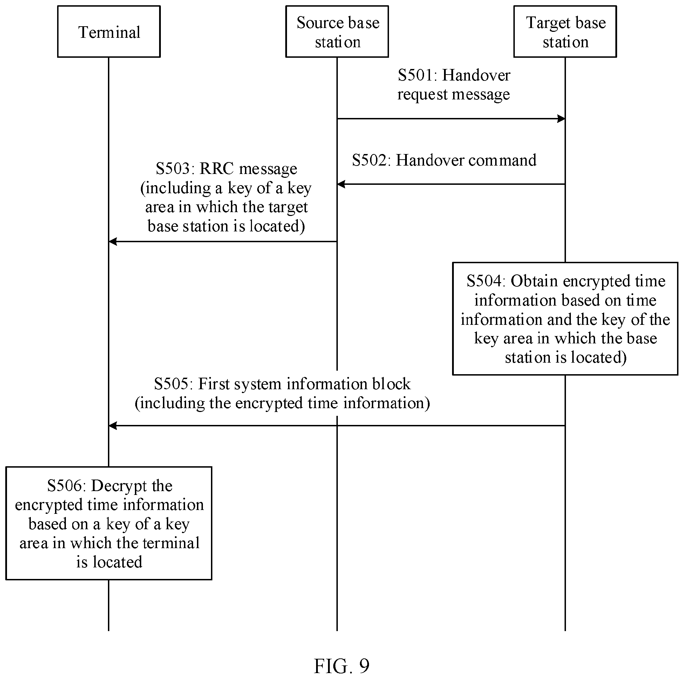

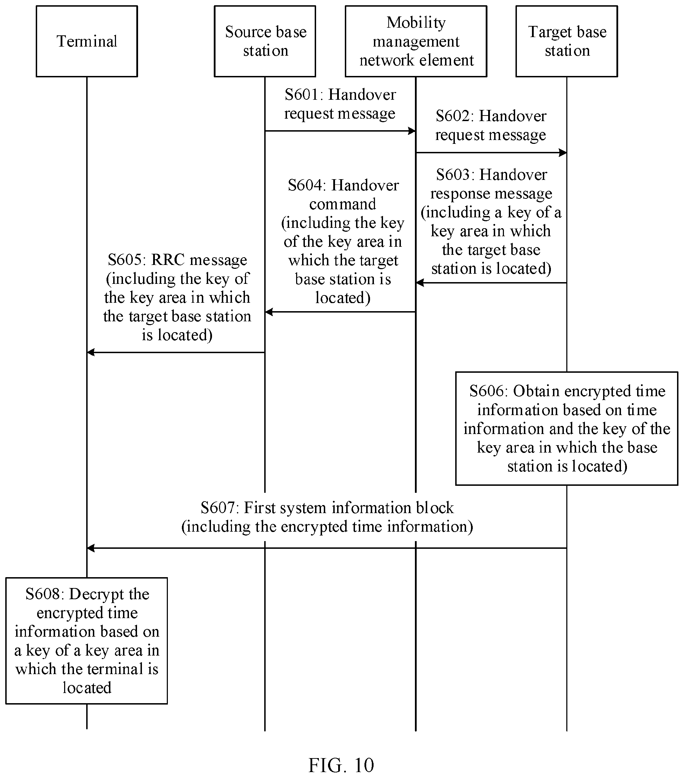

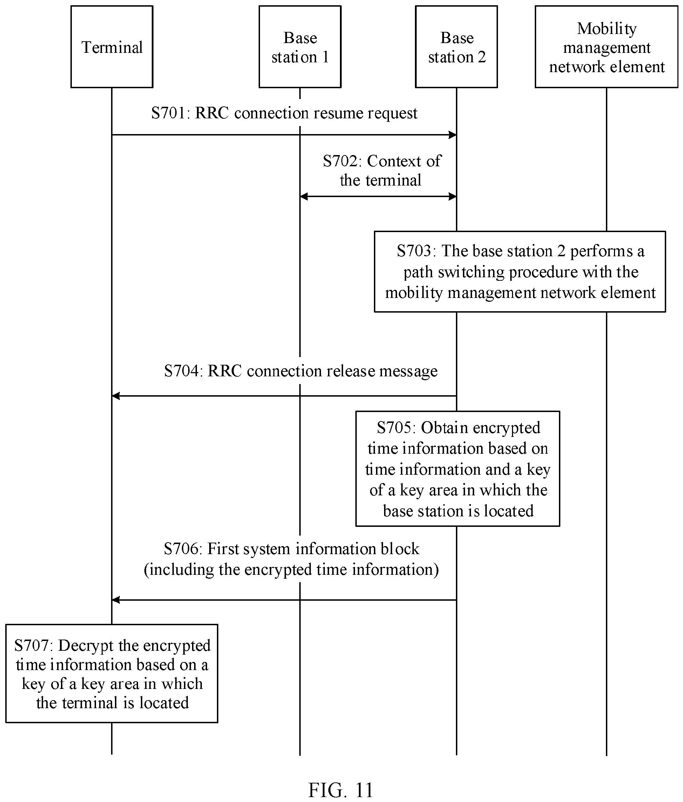

It should be noted that the terminal 100 may be configured to perform an action of the terminal in the method embodiments of this application, the base station 200 may be configured to indicate an action of the first base station in the embodiment shown in FIG. 5 in this application, an action of the base station in any one of the embodiments shown in FIG. 6 to FIG. 7b, an action of the source base station or the target base station in either of the embodiments shown in FIG. 9 and FIG. 10, or an action of the base station 1 or the base station 2 in either of the embodiments shown in FIG. 8 and FIG. 11, and the mobility management network element 300 may be configured to indicate an action of the mobility management network element in the method embodiments of this application.

For example, the terminal 100 may obtain the key in the following manner: The terminal 100 obtains, from the mobility management network element 300, the key of the key area in which the terminal 100 is located; or the mobility management network element 300 authorizes and indicates the base station 200 to send the key to the terminal 100; or the mobility management network element 300 sends, to the source base station, a key that is in a key area in which the target base station is located and that is obtained from the target base station, and then the source base station sends the key to the terminal.

In addition, the embodiments of this application may be applied to the 4G or 5G communications system. The following briefly describes the 4G and 5G communications systems.

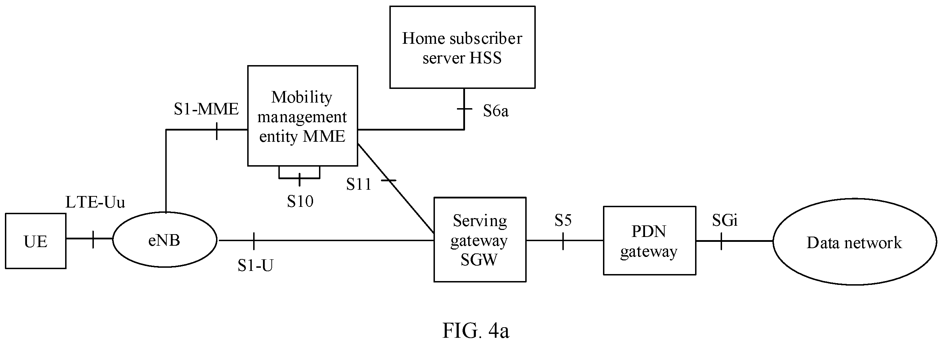

FIG. 4a is a schematic architectural diagram of a 4G communications system. The communications system may include a terminal, an eNB, and an MME. The communications system may further include other function entities, for example, a home subscriber server (home subscriber server, HSS), a serving gateway (serving gateway, SGW), and a PDN gateway (PDN gateway, PGW) in a core network. Only several function entities in this application are mainly described herein. The entities are connected to each other through interfaces Sx (for example, S1-MME and S1-U in the figure). The HSS is configured to manage user subscription information. The SGW provides a user plane function for user data forwarding. The PGW is a border gateway on an EPC network, and provides functions such as user session management and bearer control, data forwarding, IP address assignment, and non-3GPP user access.

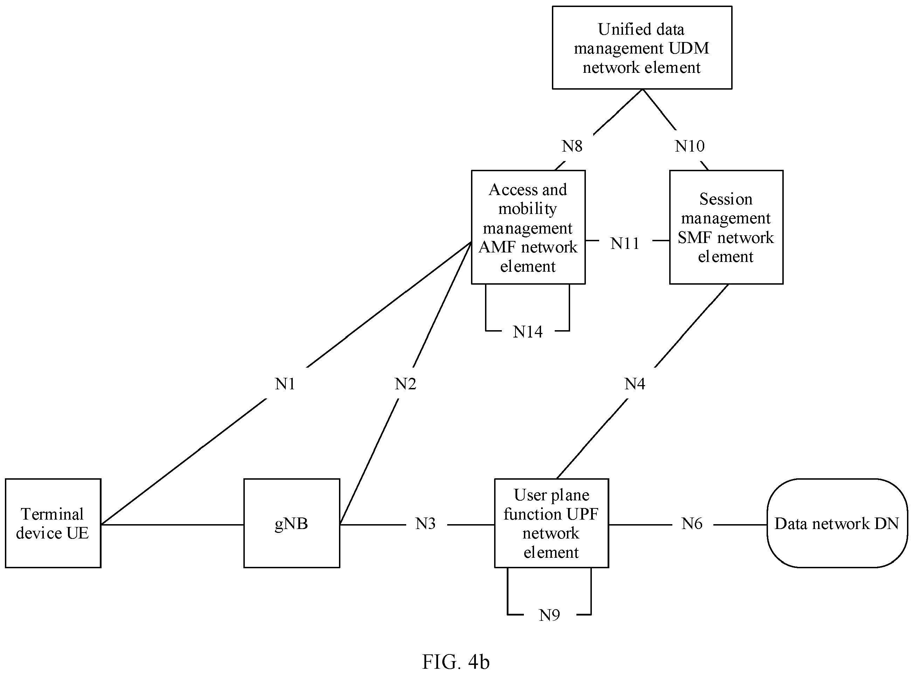

FIG. 4b is a schematic architectural diagram of a 5G communications system. The communications system may include a terminal, an NG-RAN, and an AMF The communications system may further include other function entities, for example, a unified data management (unified data management, UDM) network element, a user plane function (user plane function, UPF) network element, and a session management (session management function, SMF) network element. Only several function entities in this application are mainly described herein. The entities are connected to each other through interfaces Nx (for example, N1 and N2 in the figure). The UDM is configured to manage user subscription information. The UPF is mainly responsible for forwarding a packet data packet, controlling quality of service (quality of service, QoS), collecting statistics about charging information, and the like. The SMF is responsible for unified session management.

In a specific implementation, any function entity or network element in the system shown in FIG. 3, FIG. 4a, or FIG. 4b may be implemented by one physical device, or may be jointly implemented by a plurality of physical devices. This is not specifically limited in the embodiments of this application. In other words, it may be understood that any function entity or network element in the system may be a logical function module in a physical device, or may be a logical function module including a plurality of physical devices. This is not specifically limited in the embodiments of this application.

It should be noted that, terms "system" and "network" in the embodiments of this application may be used interchangeably. "A plurality of" means two or more than two. In view of this, "a plurality of" may also be understood as "at least two" in the embodiments of this application. The term "and/or" describes an association relationship for describing associated objects and represents that three relationships may exist. For example, A and/or B may represent the following three cases: Only A exists, both A and B exist, and only B exists. In addition, the character "/" usually indicates an "or" relationship between the associated objects. In addition, to clearly describe the technical solutions in the embodiments of this application, in the embodiments of this application, terms such as "first" and "second" are used to distinguish between same items or similar items that have basically same functions and purposes. A person skilled in the art may understand that the terms such as "first" and "second" do not limit a quantity or an execution sequence, and the terms such as "first" and "second" do not indicate a definite difference. The embodiments of this application may be applied to not only the foregoing 4G or 5G communications system, but also an evolved communications system following the 4G or 5G communications system. This is not limited.

FIG. 5 is a schematic interaction flowchart of a communications method according to an embodiment of this application. The method may include the following steps.

S101: A first base station obtains encrypted time information based on time information and a key of a key area in which the first base station is located.

The time information may be used for synchronization of terminals in the key area in which the first base station is located. For example, the time information may be a moment value.

In an example, the first base station may encrypt the time information by using an existing encryption algorithm. For example, the encryption algorithm may be a 128-EEA (EPS encryption algorithm) 1 algorithm based on SNOW 3G, a 128-EEA 2 algorithm based on an advanced encryption standard (advanced encryption standard, AES), or a 128-EEA 3 algorithm based on Zu Chongzhi (Zu Chongzhi, ZUC).

S102: The first base station sends a first system information block (system information block, SIB), where the first system information block includes the encrypted time information.

The first base station may send the first system information block in a broadcast manner, so that all terminals in a coverage area of the first base station can receive the first system information block.

The first system information block may be any one of an SIB 1 to an SIB 100.

Correspondingly, the terminal receives the first system information block from the first base station.

Because the terminal may receive the first system information block sent by the first base station, it may be understood that the terminal and the first base station are in a same key area. In this case, a key of a key area in which the terminal is located is the same as the key of the key area in which the first base station is located. Therefore, the time information may also be referred to as time information used for synchronization of terminals in the key area in which the terminal is located.

S103: The terminal decrypts the encrypted time information based on the key of the key area in which the terminal is located.

In step S103, the terminal may obtain the decrypted time information, and the terminal may be synchronized with another terminal in the key area based on the decrypted time information. For example, each terminal that performs a time synchronization service adjusts a time of the terminal to the moment value included in the received first system information block.

According to the method provided in this embodiment, the base station encrypts the time information and sends the encrypted time information to the terminal, and the terminal obtains, through decrypting, the time information based on the key of the key area in which the terminal is located, to implement secure transmission of the time information, so that the terminals can be synchronized. In this way, in the industrial scenario mentioned in the background, the controller and each executor obtain the encrypted time information, and each executor can implement synchronization with the controller and another executor based on the time information, to accurately execute an instruction of the controller. The time information is encrypted, and a terminal that does not obtain the key cannot obtain the time information through decryption. Therefore, an operator may charge the time synchronization service.

Optionally, before S101, the method further includes: The base station generates or obtains the time information.

In an implementation, the base station may obtain the time information from another device, module, or network. For example, the base station may obtain the time information from a GPS module disposed on the base station, or obtain the time information by using the 1588 protocol or the network time protocol (network time protocol, NTP) between the base station and a time server. The base station may directly send the obtained time information to the terminal in the first system information block.

In another implementation, the base station may also generate the time information with reference to a policy of the base station by using the time information obtained by the base station in the foregoing implementation, and send the generated time information to the terminal. For example, the time information carried in the first system information block may be related to a physical layer frame structure of the base station, and the first system information block may be sent at a time reference point. The first system information block carries the time information obtained by the base station from the another device, module, or network. The terminal determines, based on the time reference point and the time information carried in the first system information block, the time information for synchronization of the terminals.

Optionally, in a first implementation scenario in the foregoing embodiment, the method further includes: The base station obtains the key of the key area in which the base station is located.

In an implementation, the base station receives, from an operation, administration, and maintenance (operation administration and maintenance, OAM) entity, the key of the key area in which the base station is located. For example, when the base station is powered on and enabled, the base station establishes a connection to the OAM entity, and the base station obtains, from the OAM entity, the key of the key area in which the base station is located, or the OAM entity actively sends the key of the key area in which the base station is located to the base station. Further, after the base station establishes an S1 interface connection to the mobility management network element, the base station may further send the key of the key area in which the base station is located to the mobility management network element.

Further, a security function entity may generate the key of the key area in which the base station is located in step S101, and send the generated key to the OAM entity. The security function entity is configured to: generate and maintain the key. The security function entity may be an independent physical device (for example, may be an existing network element such as an authentication server function (authentication server function, AUSF) entity or a UDM, or may be a new security network element such as a time synchronization security server or a time synchronization security function entity), or may be a function module in a physical device (for example, an OAM entity).

Further, when the base station is powered on and enabled, the base station may directly obtain the key from the security function entity, or the security function entity actively sends the key to the base station.

It should be noted that the key of the key area in which the base station is located in step S101 may also be referred to as an encryption key of the key area in which the base station is located.

In another implementation, the security function entity or the OAM entity may further send the key of the key area in which the base station is located to the mobility management network element, and then the mobility management network element sends the key to the base station. For example, when the mobility management network element is powered on and enabled, the mobility management network element establishes a connection to the OAM entity. Then, the mobility management network element requests, from the OAM entity, the key of the key area in which the base station is located, and the OAM entity sends the key of the key area in which the base station is located to the mobility management network element; or the OAM entity actively sends the key of the key area in which the base station is located to the mobility management network element. When the base station is powered on and enabled, the base station establishes an S1 interface connection to the mobility management network element, and the mobility management network element sends the key of the key area in which the base station is located to the base station.

Optionally, in a second implementation scenario in the foregoing embodiment, the method further includes: The base station protects the time information or the first system information block by using an integrity protection algorithm.

Specifically, the first system information block may carry an integrity check value of the time information or an integrity check value of the first system information block. After receiving the first system information block, the terminal checks the integrity check value, to determine whether the received time information or the first system information block is complete. For example, the integrity protection algorithm may be a 128-EIA (EPS integrity algorithm) 1 algorithm based on SNOW 3G, a 128-EEA 2 algorithm based on AES (advanced encryption standard), or a 128-EEA 3 algorithm based on ZUC (Zu Chongzhi, ZUC).

Further, the base station may obtain an integrity protection parameter in the key area in which the base station is located, for example, an integrity protection key or an integrity protection algorithm. The integrity protection key may be generated by the security function entity, or may be generated by the OAM entity and sent to the base station. This is similar to a manner in which the base station obtains the key of the key area in which the base station is located in the first implementation scenario. Details are not described again.

Optionally, in a third implementation scenario in the foregoing embodiment, the method further includes: The base station signs the time information or the first system information block by using a certificate.

Further, the base station may obtain a certificate that is in the key area in which the base station is located and that is used to sign the time information or the first system information block. For example, the security function entity generates the certificate used to sign the time information or the first system information block, and sends the certificate to the base station; or the OAM entity or the mobility management network element obtains the certificate from the security function entity, and sends the certificate to the base station. This is similar to a manner in which the base station obtains the key of the key area in which the base station is located in the first implementation scenario. Details are not described again.

Further, the base station may also obtain a certificate from a third-party certificate authority (certificate authority, CA).

Optionally, in a fourth implementation scenario in the foregoing embodiment, the method further includes: The terminal may obtain, in the following manners, the key of the key area in which the terminal is located

Manner 1: The terminal obtains, based on the first system information block, the key of the key area in which the terminal is located.

Manner 2: The terminal obtains a key of a second key area when the terminal moves from a first key area to the second key area.

The second key area may be the key area in which the terminal is located.

Manner 3: The terminal receives, from the base station, a second system information block that carries key-related information, and obtains, based on the key-related information, the key of the key area in which the terminal is located.

Manner 1 in which the terminal obtains, based on the first system information block, the key of the key area in which the terminal is located may be specifically implemented in the following manners:
Manner 1.1: When the first system information block further includes key-related information, and the terminal stores a key corresponding to the key-related information, the terminal obtains the stored key corresponding to the key-related information.

The key-related information may be used to obtain the key. For example, the key-related information may include an identifier of the key or an identifier of the key area. The identifier of the key may be used to uniquely identify the key, and the identifier of the key area may be used to uniquely identify the key area. A plurality of different key areas may use a same key or different keys.

Specifically, the terminal may use, as the key of the key area in which the terminal is located, the key that corresponds to the key-related information and that is stored in the terminal.

For example, the terminal may obtain the key of the key area in advance, and store a correspondence between the key of the key area and the key-related information, for example, a correspondence between the key of the key area and the identifier of the key area. After receiving the first system information block, the terminal may obtain, based on the key-related information in the first system information block and the stored correspondence, the key corresponding to the key-related information.

The terminal may obtain the key of the key area in advance by receiving a key of a neighboring key area. For example, when the terminal is in a key area A, the terminal may receive and store a key of a neighboring key area B of the key area A, and then when the terminal moves to the key area B, the terminal may obtain the key that is in the key area B and that is stored in the terminal and use the key as the key of the key area in which the terminal is located, to decrypt the encrypted time information.

Manner 1.2: When the first system information block further includes key-related information, and the terminal does not store a key corresponding to the key-related information, the terminal obtains the key of the key area in which the terminal is located.

Specifically, Manner 1.2 in which the terminal obtains the key of the key area in which the terminal is located may be as follows: The terminal may obtain, from the base station, the mobility management network element, or the security function entity, the key corresponding to the key-related information. For details, refer to the following examples.

In an example, the terminal sends a non-access stratum (non-access stratum, NAS) request message to the mobility management network element. The mobility management network element receives the NAS request message from the terminal, and sends a NAS response message to the terminal based on the NAS request message, where the NAS response message includes the key of the key area in which the terminal is located. Correspondingly, the terminal receives the NAS response message from the mobility management network element, and obtains the key that is in the NAS response message and that is in the key area in which the terminal is located.

The NAS request may be used to request to obtain the key of the key area in which the terminal is located. For example, the NAS request message includes an attach request (attach request), a tracking area update (tracking area updated, TAU) request, a registration (registration) request, or other NAS signaling.

The mobility management network element may obtain the key from the OAM entity or the base station. For details, refer to the foregoing related descriptions. Details are not described again.

It should be noted that the mobility management network element may send, to the terminal in a preset condition by using the NAS response message, the key of the key area in which the terminal is located. For example, the mobility management network element receives the NAS request message from the terminal, and obtains subscription information of the terminal based on the NAS request message. When the mobility management network element determines, based on the subscription information, that the terminal is authorized to use a time synchronization service, the mobility management network element uses the NAS response message to carry the key of the key area in which the terminal is located. When the mobility management network element determines, based on the subscription information, that the terminal is not authorized to use a time synchronization service, the mobility management network element sends the NAS response message to the terminal, where the NAS response message does not carry the key. Optionally, the NAS response message carries a failure cause value, and the failure cause value is used to indicate that the terminal is not authorized to use the time synchronization service.

The mobility management network element may obtain the subscription information of the terminal based on an identifier that is of the terminal and that is carried in the NAS request message. If the mobility management network element has obtained the subscription information of the terminal and locally stores the subscription information of the terminal, the mobility management network element may obtain the subscription information of the terminal locally; or may obtain the subscription information of the terminal from an HSS. The HSS uniformly manages the subscription information of the terminal.

In another example, the terminal sends a first radio resource control (radio resource control, RRC) message to the base station. The base station receives the first RRC message, and sends a second RRC message to the terminal based on the first RRC message. The terminal receives the second RRC message. The second RRC message includes the key of the key area in which the terminal is located.

It should be noted that in different communication scenarios or in different states of the terminal, names of RRC messages exchanged between the terminal and the base station may be different. For example, when the terminal is in an idle state, the first RRC message may be an RRC connection setup request message, and the second RRC message may be an RRC connection reconfiguration message. When the terminal is in a connected state, the first RRC message may be an RRC request message, and the second RRC message may be an RRC response message. Details are separately described below.

In a communication scenario, the terminal sends the RRC connection setup request message to the base station, where the RRC connection setup request message includes the non-access stratum request message, and the non-access stratum request message is used to request the subscription information of the terminal. The base station receives the RRC connection setup request message, and sends the non-access stratum request message to the mobility management network element. After receiving the non-access stratum request message, the mobility management network element obtains the subscription information of the terminal based on the non-access stratum request message, and when determining, based on the subscription information, that the terminal is authorized to use the time synchronization service, the mobility management network element encapsulates the key of the key area in which the terminal is located in the NAS response message. Then, the mobility management network element sends the NAS response message to the base station. The base station receives the NAS response message, and sends the RRC connection reconfiguration message to the terminal. The RRC connection reconfiguration message includes the NAS response message. Correspondingly, the terminal receives the RRC connection reconfiguration message, obtains the NAS response message in the RRC connection reconfiguration message, and obtains a key in the NAS response message.

In another communication scenario, the terminal sends the RRC request message to the base station, where the RRC request message does not include the non-access stratum request message. The base station receives the RRC request message, and sends the RRC response message to the terminal based on the RRC request message. The RRC response message includes the key of the key area in which the terminal is located. The terminal receives the RRC response message, and obtains, from the RRC response message, the key of the key area in which the terminal is located. In this communication scenario, the terminal may be in a connected state, and the terminal may request, from the base station by using the RRC request message, the key of the key area in which the terminal is located. The base station stores the key of the key area, and the base station may use the RRC response message to carry the key.

Manner 1.3: When the terminal fails to decrypt the encrypted time information based on a key stored in the terminal, the terminal obtains the key of the key area in which the terminal is located.

For example, the terminal may decrypt the time information in the first system information block by using the stored key. If the decryption succeeds, it indicates that the key of the key area in which the terminal is located has not changed; or if the decryption fails, the terminal obtains a changed key.

A change in the key may include a plurality of cases. For example, the key of the key area in which the terminal is located is updated. In this case, the terminal may obtain the changed key from the base station or the mobility management network element. For another example, the key area in which the terminal is located changes, that is, the terminal moves from a source base station in a first key area to a target base station in a second key area. In this case, the terminal may obtain, the method provided in Manner 2, the key of the key area in which the terminal is located. This is not limited.

It should be noted that for Manner 1.3 in which the terminal obtains the key of the key area in which the terminal is located, reference may be made to related descriptions in Manner 1.2. Details are not described again.

Manner 1.4: The terminal compares key-related information in the first system information block with key-related information corresponding to a key stored in the terminal, and when the two pieces of key-related information are the same, the terminal uses the stored key as the key of the key area in which the terminal is located; or when the two pieces of key-related information are different, the terminal obtains the key of the key area in which the terminal is located.

It should be noted that for Manner 1.4 in which the terminal obtains the key of the key area in which the terminal is located, reference may be made to related descriptions in Manner 1.2. Details are not described again.

Manner 1.5: The first system information block triggers the terminal to obtain the key of the key area in which the terminal is located. To be specific, the first system information block is used as a trigger message to trigger the terminal to perform an action of obtaining the key of the key area in which the terminal is located.

It should be noted that for Manner 1.5 in which the terminal obtains the key of the key area in which the terminal is located, reference may be made to related descriptions in Manner 1.2. Details are not described again. In addition, Manners 1.2 to 1.5 in which the terminal obtains the key of the key area in which the terminal is located may also be implemented in a related implementation in Manner 2. In other words, implementations of Manner 1 and Manner 2 may be combined with each other. This is not limited.

Manner 2 in which the terminal obtains the key of the second key area when the terminal moves from the first key area to the second key area may be specifically implemented in the following manners. For ease of describing a technical solution in Manner 2, the base station in step S101 may be referred to as a first base station.

Manner 2.1: The terminal obtains the key of the second key area when the terminal reselects a cell (a cell B) in the second key area from a cell (a cell A) in the first key area.

In an example, the terminal sends a non-access stratum request message to the mobility management network element, and receive a non-access stratum response message from the mobility management network element, where the non-access stratum response message includes the key of the second key area.

For a process of obtaining the key in this example, refer to a process in which the terminal obtains the key by using the NAS request message in Manner 1.2.

In another example, the terminal sends a first RRC message to a second base station corresponding to the cell (the cell B) in the second key area, and receives a second RRC message from the second base station, where the second RRC message includes the key of the second key area.

It should be noted that in different communication scenarios or in different states of the terminal, names of RRC messages exchanged between the terminal and the base station may be different. For example, when the terminal is in an idle state, the first RRC message may be an RRC connection setup request message, and the second RRC message may be an RRC connection reconfiguration message. When the terminal is in a connected state, the first RRC message may be an RRC request message, and the second RRC message may be an RRC response message. For details, refer to Manner 1.2.

It should be noted that the second base station may be the same as the first base station, or may be different from the first base station, but the two base stations are located in a same key area. This is not limited.

Manner 2.2: The terminal obtains the key of the second key area when the terminal is handed over from a source base station in the first key area to a target base station in the second key area.

For example, the terminal may be in a connected state, and the terminal receives an RRC message from the source base station, where the RRC message includes the key of the second key area.

It should be noted that the target base station may be the same as the first base station, or may be different from the first base station, but the two base stations are located in a same key area. This is not limited.

In a communication scenario, the terminal is handed over from the source base station to the target base station through an interface X2 between the base stations. The source base station sends a handover request message to the target base station. The target base station receives the handover request message, and sends a handover command to the source base station, where the handover command includes the key of the second key area in which the target base station is located. The source base station receives the handover command from the target base station, and sends the RRC message to the terminal, where the RRC message includes the key of the second key area in which the target base station is located. Correspondingly, the terminal receives the RRC message.

In another communication scenario, the terminal is handed over from the source base station to the target base station through an interface S1. The source base station sends a handover request message to the mobility management network element. The mobility management network element receives the handover request message, and sends the handover request message to the target base station. The target base station receives the handover request message, and sends a handover request response message to the mobility management network element. The handover request response message includes the key of the second key area in which the target base station is located. Correspondingly, the mobility management network element receives the handover request response message, and sends a handover command message to the source base station. The handover command message includes the key of the key area in which the target base station is located. The source base station receives the handover command, and sends the RRC message to the terminal. The RRC message includes the key of the second key area in which the target base station is located. The terminal receives the RRC message, and obtains, from the RRC message, the key of the second key area in which the target base station is located, namely, the key of the key area in which the terminal is located.

Manner 2.3: The terminal obtains the key of the second key area when the terminal moves from a radio access network-based notification area (radio access network notification area, RNA) in the first key area to an RNA in the second key area.

For example, the terminal may be in an inactive state, and the terminal moves from the RNA in the first key area to a base station (which may be referred to as a third base station) in the RNA in the second key area. In this case, the terminal may send an RRC connection resume request message to the third base station, and receive an RRC connection release message or an RRC connection resume message from the third base station, where the RRC connection release message or the RRC connection resume message includes the key of the second key area.

It should be noted that the third base station may be the same as the first base station, or may be different from the first base station, but the two base stations are located in a same key area. This is not limited.

Optionally, in a fifth implementation scenario in the foregoing embodiment, the method further includes: The base station may send, in the following three manners, the key of the key area in which the base station is located to the terminal.

Manner 1: The base station receives authorization indication information from the mobility management network element, where the authorization indication information is used to indicate that the terminal is authorized to use a time synchronization service; and the base station sends, based on the authorization indication information, the key of the key area in which the base station is located to the terminal.

For example, the terminal sends a NAS request message to the mobility management network element. The mobility management network element receives the NAS request message, obtains subscription information of the terminal, and determines, based on the subscription information, whether the terminal is authorized to use the time synchronization service. If the terminal is authorized to use the time synchronization service, the mobility management network element sends the authorization indication information to the base station. Correspondingly, the base station receives the authorization indication information, and sends the key to the terminal based on the authorization indication information.

The NAS request message includes an attach request, a TAU request, a registration request, or other NAS signaling. This is not limited. Specifically, the NAS request message may be carried in a first RRC message. After receiving the first RRC message, the base station sends the NAS request message to the mobility management network element. Further, the base station may send the RRC message including the received authorization indication information to the terminal.

In the foregoing example, the base station may obtain the key from the mobility management network element or the OAM entity in advance. This is not limited.

Manner 2: The base station is a target base station in a second key area, the terminal is handed over from a source base station in a first key area to the target base station, and that the base station sends the key of the key area in which the base station is located to the terminal may include:
receiving, by the target base station, a handover request message from the source base station, and sending a handover command to the source base station, where the handover command includes the key of the second key area; or
receiving, by the target base station, a handover request message from the mobility management network element, and sending a handover request response message to the mobility management network element, where the handover request response message includes the key of the second key area.

For example, in a communication scenario, the terminal is handed over from the source base station to the target base station through an interface X2 between the base stations. The source base station sends a handover request message to the target base station. The target base station receives the handover request message, and sends a handover command to the source base station, where the handover command includes the key of the second key area in which the target base station is located. The source base station receives the handover command from the target base station, and sends the RRC message to the terminal, where the RRC message includes the key of the second key area in which the target base station is located. The terminal receives the RRC message, and obtains, from the RRC message, the key of the second key area in which the target base station is located, namely, the key of the key area in which the terminal is located.

In another communication scenario, the terminal is handed over from the source base station to the target base station through an interface S1. The source base station sends a handover request message to the mobility management network element. The mobility management network element receives the handover request message, and sends the handover request message to the target base station. The target base station receives the handover request message, and sends a handover request response message to the mobility management network element. The handover request response message includes the key of the second key area in which the target base station is located. The mobility management network element receives the handover request response message, and sends a handover command message to the source base station, where the handover command message includes the key of the key area in which the target base station is located. The source base station receives the handover command, and sends the RRC message to the terminal, where the RRC message includes the key of the second key area in which the target base station is located. Correspondingly, the terminal receives the RRC message, and obtains, from the RRC message, the key of the second key area in which the target base station is located, namely, the key of the key area in which the terminal is located.

Manner 3: The terminal moves from an RNA in a first key area to the base station in an RNA in a second key area, and that the base station sends the key of the key area in which the base station is located to the terminal may include:
receiving, by the base station, an RRC connection resume request message from the terminal; and
sending, by the base station, an RRC connection release message or an RRC connection resume message to the terminal based on the RRC connection resume request message, where the RRC connection release message or the RRC connection resume message includes the key of the second key area.

It should be noted that the method provided in the fifth implementation scenario may be independent of steps S101 to S104, in other words, may be an independent method. The method is used by the base station to send the key of the key area to the terminal.

Optionally, in a sixth implementation scenario in the foregoing embodiment, the method further includes: The base station sends a third system information block. Correspondingly, the terminal receives the third system information block from the base station.

The third system information block may include indication information, and the indication information may be used to indicate the first system information block used to carry the encrypted time information.

Further, the terminal may obtain the encrypted time information from the first system information block indicated by the indication information.

For example, if the third system information block may be an SIB 1, the first system information block may be an SIB other than the SIB 1. Certainly, this is not limited thereto. Usually, the base station broadcasts the SIB 1 and the another SIB (which may be referred to as an SIB x). The base station uses the SIB 1 to carry the indication information, where the indication information may indicate the SIB x used to carry the encrypted time information. In this case, the terminal listens to the SIB 1 and receives the indication information from the SIB 1, and may determine, based on the indication information, the first system information block that carries the encrypted time information.

It should be noted that the third system information block and the second system information block may be the same or different. This is not limited.

Optionally, in a seventh implementation scenario in the foregoing embodiment, the method further includes:
The base station receives, from the mobility management network element, a neighboring base station, or the operation, administration, and maintenance entity, a key of a neighboring key area of the key area in which the base station is located; and the base station sends the key of the neighboring key area.

Correspondingly, the method may further include: The terminal receives a key of a neighboring key area of the key area in which the terminal is located.

In an example, the base station may send the key of the neighboring key area in a broadcast manner. Further, after receiving the key of the neighboring key area, the base station may encrypt the key of the neighboring key area by using the key of the key area in which the base station is located, and then send the key of the neighboring key area to the terminal. Then, the terminal decrypts the key of the neighboring key area by using the key of the key area in which the base station is located, to obtain the decrypted key of the neighboring key area. The base station may further sign, by using a certificate, a message for sending the key of the neighboring key area, or may perform, by using an integrity protection key, integrity protection on a message for sending the key of the neighboring key area.

In another example, the base station may alternatively send the key of the neighboring key area in a unicast manner. Further, after receiving the key of the neighboring key area, the base station may perform security protection on the key of the neighboring key area by using an AS stratum security key negotiated between the base station and the terminal, and then send the key of the neighboring key area to the terminal. After receiving the key of the neighboring key area, the terminal decrypts the key of the neighboring key area by using a corresponding AS stratum security key.

That the base station sends the key of the neighboring key area in a unicast manner may be applied to a base station handover process. For example, the source base station may send a key of a neighboring key area of a key area in which the target base station is located to the terminal. Specifically, the source base station receives the key of the neighboring key area of the key area in which the target base station is located, and sends the key of the neighboring key area of the key area in which the target base station is located to the terminal. The terminal receives the key of the neighboring key area of the key area in which the target base station is located.

It should be noted that the embodiment scenarios in the foregoing embodiment may be combined with each other. For example, every two embodiment scenarios may be combined, or more than two embodiment scenarios may be combined. This is not limited.

The following specifically describes the foregoing communications method with reference to a specific communication scenario.

In an example communication scenario, the terminal initially accesses a network, and the terminal obtains a key from the mobility management network element by using NAS signaling. The network may be an operator network, and may include an access network and a core network. The core network may include an AMF, an SMF, and the like in a 5G system. This is not limited.

FIG. 6 is a schematic interaction flowchart of an example communications method according to an embodiment of this application. The method may include the following steps.

S201: A terminal sends a NAS request message to a mobility management network element.

Correspondingly, the mobility management network element receives the NAS request message.

The NAS request message is used to request to obtain a key of a key area in which the terminal is located. The NAS request message may include an attach request, a TAU request, a registration request, or other NAS signaling.

S202: The mobility management network element obtains subscription information of the terminal based on the NAS request message.

For example, if the mobility management network element has stored context information of the terminal, and the context information includes the subscription information of the terminal, the mobility management network element may locally obtain the subscription information of the terminal. If the mobility management network element does not have context information of the terminal, or context information of the terminal does not include the subscription information of the terminal, the mobility management network element may obtain the subscription information of the terminal from an HSS or a UDM based on an identifier that is of the terminal and that is carried in the NAS request message.

S203: The mobility management network element determines, based on the subscription information of the terminal, whether the terminal is authorized to use a time synchronization service.

For example, the subscription information of the terminal includes information indicating whether the terminal has subscribed to the time synchronization service. When the mobility management network element determines, based on the subscription information, that the terminal has subscribed to the time synchronization service, it indicates that the terminal is authorized to use the time synchronization service, and the mobility management network element may use a NAS response message to carry the key of the key area in which the terminal is located. When the mobility management network element determines, based on the subscription information, that the terminal has not subscribed to the time synchronization service, it indicates that the terminal is not authorized to use the time synchronization service, and the mobility management network element sends a NAS response message to the terminal. Optionally, the NAS response message may carry a failure cause value, and the failure cause value may be used to indicate that the terminal is not authorized to use the time synchronization service.

Steps S202 and S203 are optional.

S204: The mobility management network element sends the NAS response message to the terminal, where the NAS response message includes the key of the key area in which the terminal is located.

Correspondingly, the terminal receives the NAS response message, and the terminal may obtain the key from the NAS response message and store the key.

S205: A base station sends a second system information block to the terminal.

Correspondingly, the terminal receives the second system information block.

Step S205 is optional.

In an implementation, the second system information block includes key-related information. The terminal may receive, from the base station, the second system information block that carries the key-related information, and obtain, based on the key-related information, the key of the key area in which the terminal is located. For details, refer to related descriptions in the embodiment shown in FIG. 5. The details are not described again.

In another implementation, the second system information block includes indication information, and the indication information indicates a first system information block used to carry encrypted time information. The terminal may obtain, based on the indication information, the encrypted time information from the first system information block indicated by the indication information. For details, refer to related descriptions in the embodiment shown in FIG. 5. The details are not described again.

S206: The base station obtains the encrypted time information based on time information and a key of a key area in which the base station is located.

For implementation of this step, refer to step S101 in the embodiment shown in FIG. 5.

S207: The base station sends the first system information block, where the first system information block includes the encrypted time information.

Correspondingly, the terminal receives the first system information block.

For implementation of this step, refer to step S102 in the embodiment shown in FIG. 5.

S208: The terminal decrypts the encrypted time information based on the obtained key.

For implementation of this step, refer to step S104 in the embodiment shown in FIG. 5.

According to the method provided in this embodiment of this application, the base station uses the system information block to carry the encrypted time information; and the terminal obtains the key from the mobility management network element by using the NAS signaling, and decrypts the encrypted time information based on the key, to implement secure transmission of the time information.

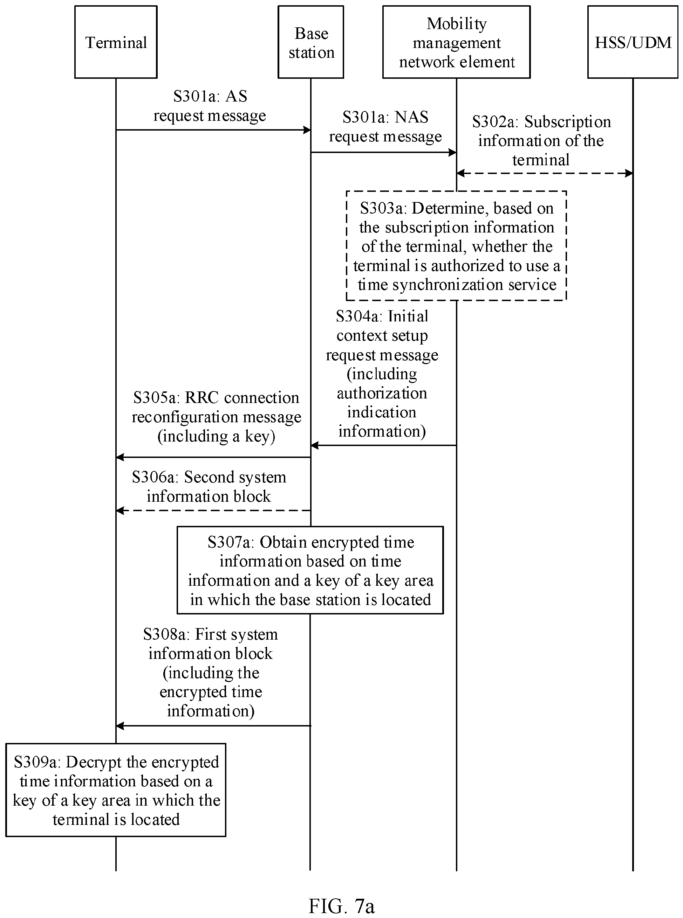

In another example communication scenario, the terminal initially accesses a network, and obtains a key by using AS signaling. Further, if the AS signaling includes a NAS message, the mobility management network element indicates, by using authorization indication information, the base station to send the key to the terminal. FIG. 7a is a schematic interaction flowchart of another example communications method according to an embodiment of this application. FIG. 7a shows a case in which AS signaling includes a NAS message. The method may include the following steps.

S301a: A base station receives an AS request message sent by a terminal, and sends a NAS request message in the AS request message to a mobility management network element.

Correspondingly, the mobility management network element receives the NAS request message.

The AS request message may be an RRC connection setup request message, and the NAS request message may be an attach request, a TAU request, a registration request, or the like.

S302a: The mobility management network element obtains subscription information of the terminal based on the NAS request message.

For implementation of this step, refer to step S202 in the embodiment shown in FIG. 6.

S303a: The mobility management network element determines, based on the subscription information, whether the terminal is authorized to use a time synchronization service.

For implementation of this step, refer to step S203 in the embodiment shown in FIG. 6.

S304a: The mobility management network element sends an initial context setup request message to the base station.

The initial context setup request message includes authorization indication information. The authorization indication information may be used to indicate that the terminal is authorized to use the time synchronization service.

S305a: The base station sends an RRC connection reconfiguration message to the terminal. The RRC connection reconfiguration message includes a key of a key area in which the terminal is located.

For example, the base station determines, based on the authorization indication information, to send the key to the terminal, and the base station sends, to the terminal, the RRC connection reconfiguration message including the key of the key area in which the terminal is located.

Correspondingly, the terminal receives the RRC connection reconfiguration message, and obtains and stores the key.

S306a: The base station sends a second system information block to the terminal.

Correspondingly, the terminal receives the second system information block.

For implementation of this step, refer to step S205 in the embodiment shown in FIG. 6.

S307a: The base station obtains encrypted time information based on time information and a key of a key area in which the base station is located.

For implementation of this step, refer to step S 101 in the embodiment shown in FIG. 5.

S308a: The base station sends a first system information block, where the first system information block includes the encrypted time information.

Correspondingly, the terminal receives the first system information block.

For implementation of this step, refer to step S 102 in the embodiment shown in FIG. 5.

S309a: The terminal decrypts the encrypted time information based on the key.

For implementation of this step, refer to step S 104 in the embodiment shown in FIG. 5.

According to the communications method provided in this embodiment of this application, the base station uses the system information block to carry the encrypted time information; the terminal obtains the key by using the AS signaling, where the AS signaling includes the NAS request message; the mobility management network element indicates, through authorization, the base station to send the key to the terminal; and the terminal receives the key and decrypts the encrypted time information based on the key, to implement secure transmission of the time information.

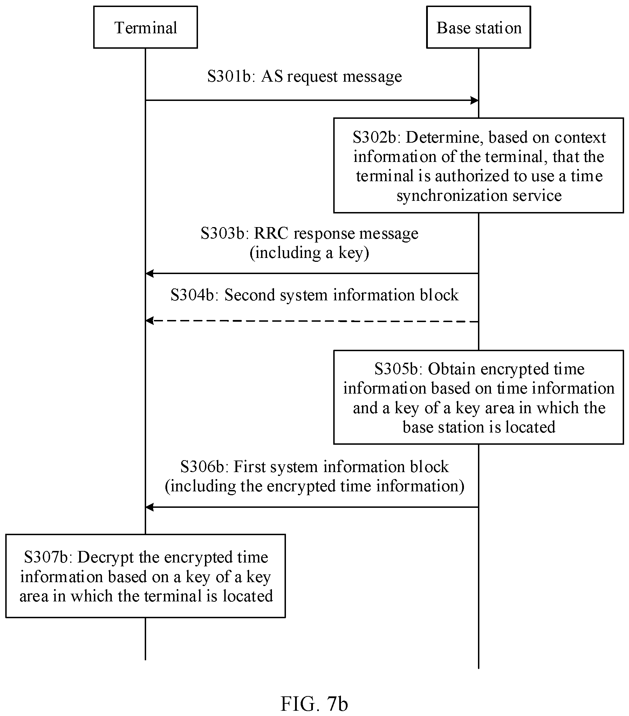

In still another example communication scenario, the terminal is in a connected state, and obtains a key from the base station (a base station that currently serves the terminal, namely, a base station that establishes an RRC signaling connection to the terminal) by using AS signaling. If the AS signaling does not include a NAS message, the terminal directly obtains the key from the base station by using the AS signaling. FIG. 7b is a schematic interaction flowchart of still another example communications method according to an embodiment of this application. The method may include the following steps.

S301b: A terminal sends an RRC request message to a base station.

The RRC request message is used to request to obtain a key of a key area in which the terminal is located.

S302b: The base station determines, based on context information of the terminal, that the terminal is authorized to use a time synchronization service.

For example, if the context information of the terminal includes authorization indication information of a mobility management network element, the base station determines that the terminal is authorized to use the time synchronization service, and may send the key of the key area in which the terminal is located to the terminal.

S303b: The base station sends an RRC response message to the terminal, where the RRC response message includes the key of the key area in which the terminal is located.

S304b: The base station sends a second system information block to the terminal.

Correspondingly, the terminal receives the second system information block.

For implementation of step S304b, refer to step S205 in the embodiment shown in FIG. 6.

S305b: The base station obtains encrypted time information based on time information and a key of a key area in which the base station is located.

For implementation of this step, refer to step S101 in the embodiment shown in FIG. 5.

S306b: The base station sends a first system information block, where the first system information block includes the encrypted time information.

Correspondingly, the terminal receives the first system information block.

For implementation of this step, refer to step S102 in the embodiment shown in FIG. 5.

S307b: The terminal decrypts the encrypted time information based on the key.

For implementation of this step, refer to step S104 in the embodiment shown in FIG. 5.

According to the communications method provided in this embodiment of this application, the base station uses the system information block to carry the encrypted time information; and the terminal obtains the key by using the AS signaling, and decrypts the encrypted time information based on the key, to implement secure transmission of the time information.

In still another example communication scenario, after the terminal performs cell reselection in an idle state, the base station changes. In this case, a key area in which the terminal is located changes, that is, the terminal does not have a key of a key area in which the terminal is currently located. FIG. 8 is a schematic interaction flowchart of still another example communications method according to an embodiment of this application. The method may include the following steps.

S401: After performing cell reselection in an idle state, a terminal chooses to camp on a cell of a base station 2.

In this case, a key area in which the terminal is located is a key area in which the base station 2 is located.

S402: The terminal determines whether a key of the key area in which the base station 2 is located is obtained in advance.

This step is optional.

For example, before the terminal performs cell reselection, if a base station 1 receives, from a mobility management network element, a neighboring base station, or an operation, administration, and maintenance entity, a key of a neighboring key area of a key area in which the base station 1 is located, the base station 1 sends the key of the neighboring key area. The terminal receives the key of the neighboring key area. The key of the neighboring key area includes a key of the key area in which the base station 2 is located. The key area may be identified by using an identifier of the key area. After performing cell reselection, the terminal determines that a key area in which the terminal is located is the key area in which the base station 2 is located. In this case, the terminal searches for the stored key of the neighboring key area based on an identifier of the key area in which the terminal is located. If the terminal finds the key of the key area in which the base station 2 is located, the terminal does not need to re-obtain the key, and may perform step S404. If the terminal does not find the stored key of the key area in which the base station 2 is located, the terminal performs step S403 or S403'.

S403: Obtain, from the mobility management network element by using NAS signaling, the key of the key area in which the base station 2 is located.

For implementation of this step, refer to steps S201 to S204 in the embodiment shown in FIG. 6.

S403': Obtain, from the base station 2 or the mobility management network element by using AS signaling, the key of the key area in which the base station 2 is located.

For implementation of this step, refer to steps S301 to S305 in the embodiment shown in FIG. 7.

S404: The base station obtains encrypted time information based on the key of the key area in which the base station is located and time information.

For implementation of this step, refer to step S101 in the embodiment shown in FIG. 5.

S405: The base station sends a first system information block, where the first system information block includes the encrypted time information.

Correspondingly, the terminal receives the first system information block.

For implementation of step S405, refer to step S102 in the embodiment shown in FIG. 5.

S406: The terminal decrypts the encrypted time information based on the key.

For implementation of this step, refer to step S104 in the embodiment shown in FIG. 5.

According to the communications method provided in this embodiment of this application, the base station uses the system information block to carry the encrypted time information; and after performing cell reselection, the terminal obtains, by using the AS signaling, the key from the base station to which a reselected cell belongs, or obtains the key from the mobility management network element by using the NAS signaling, and decrypts the encrypted time information based on the key, to implement secure transmission of the time information.

In still another example communication scenario, the terminal is in a connected state, and the terminal is handed over from the source base station to the target base station by using an interface X2 between the source base station and the target base station. A key area in which the terminal is located is a key area in which the target base station is located. FIG. 9 is a schematic interaction flowchart of still another specific example communications method according to an embodiment of this application. The method may include the following steps.

S501: A source base station sends a handover request message to a target base station.

Correspondingly, the target base station receives the handover request message.

S502: The target base station sends a handover command to the source base station, where the handover command includes a key of a key area in which the target base station is located.

Correspondingly, the source base station receives the handover command.

S503: The source base station sends an RRC message to a terminal, where the RRC message includes the key of the key area in which the target base station is located.

Correspondingly, the terminal receives the RRC message.

The RRC message may be an RRC connection reconfiguration message. This is not limited.

S504: The base station obtains encrypted time information based on the key of the key area in which the base station is located and time information.

For implementation of this step, refer to step S101 in the embodiment shown in FIG. 5.

S505: The base station sends a first system information block, where the first system information block includes the encrypted time information.

Correspondingly, the terminal receives the first system information block.

For implementation of this step, refer to step S102 in the embodiment shown in FIG. 5.

S506: The terminal decrypts the encrypted time information based on the key.

For implementation of this step, refer to step S104 in the embodiment shown in FIG. 5.

According to the communications method provided in this embodiment of this application, the base station uses the system information block to carry the encrypted time information, and the base station corresponding to the terminal changes; and the terminal obtains the key of the key area in which the target base station is located, and decrypts the encrypted time information based on the key of the key area in which the target base station is located, to implement secure transmission of the time information.

In still another example communication scenario, the terminal is in a connected state, and the terminal is handed over from the source base station to the target base station by using an interface S1. A key area in which the terminal is located is a key area in which the target base station is located. FIG. 10 is a schematic interaction flowchart of still another specific example communications method according to an embodiment of this application. The method may include the following steps.

S601: A source base station sends a handover request message to a mobility management network element.

Correspondingly, the mobility management network element receives the handover request message.

S602: The mobility management network element sends the handover request message to a target base station.

Correspondingly, the target base station receives the handover request message.

S603: The target base station sends a handover response message to the mobility management network element.

Correspondingly, the mobility management network element receives the handover response message.

The handover response message includes a key of a key area in which the target base station is located.

S604: The mobility management network element sends a handover command to the source base station.

Correspondingly, the source base station receives the handover command.

The handover command includes the key of the key area in which the target base station is located.

S605: The source base station sends an RRC message to a terminal, where the RRC message includes the key of the key area in which the target base station is located.

Correspondingly, the terminal receives the RRC message.

The RRC message may be an RRC connection reconfiguration message. This is not limited.

S606: The base station obtains encrypted time information based on the key of the key area in which the base station is located and time information.

For implementation of this step, refer to step S 101 in the embodiment shown in FIG. 5.

S607: The base station sends a first system information block, where the first system information block includes the encrypted time information.

Correspondingly, the terminal receives the first system information block.

For implementation of this step, refer to step S102 in the embodiment shown in FIG. 5.

S608: The terminal decrypts the encrypted time information based on the key.

For implementation of this step, refer to step S 104 in the embodiment shown in FIG. 5.

According to the communications method provided in this embodiment of this application, the base station uses the system information block to carry the encrypted time information, and the base station corresponding to the terminal changes; and the terminal obtains the key of the key area in which the target base station is located, and decrypts the encrypted time information based on the key of the key area in which the target base station is located, to implement secure transmission of the time information.

In still another example communication scenario, the terminal is in an inactive state, that is, the terminal establishes an RRC connection to the base station 1 and then enters an RRC inactive state (RRC inactive state), that is, the base station 1 is an anchor base station (anchor-RAN) of the terminal. In addition, the base station 1 allocates an RNA, for example, an RNA 1, to the terminal. When the terminal moves into the base station 2, and the base station 2 is not in a range of the RNA 1, in other words, the terminal moves out of the RNA 1, the terminal requests the base station 2 to resume an RRC connection. The base station 2 resumes the RRC connection for the terminal, and the base station 2 allocates a new RNA, for example, an RNA 2, to the terminal. Correspondingly, if a key area corresponding to the RNA 2 is different from a key area corresponding to the RNA 1, a key area in which the terminal is located changes from a first key area to a second key area. FIG. 11 is a schematic interaction flowchart of still another specific example communications method according to an embodiment of this application. The method may include the following steps.

S701: A terminal sends an RRC connection resume request to a base station 2.

Correspondingly, the base station 2 receives the RRC connection resume request.

The RRC connection resume request may carry an identifier of the terminal.

S702: The base station 2 obtains a context of the terminal from a base station 1.

For example, the base station 1 stores the context of the terminal. The base station 2 sends a context obtaining request message to the base station 1, where the context obtaining request message includes the identifier of the terminal. The base station 1 obtains the context of the terminal based on the identifier of the terminal, and sends the context of the terminal to the base station 2.

S703: The base station 2 performs a path switching procedure with a mobility management network element.

For the path switching procedure, refer to the prior art. Details are not described herein.

S704: The base station 2 sends an RRC connection release message to the terminal.

For example, the base station 2 determines that the terminal sends the RRC connection resume request because the terminal moves out of the RNA, that is, a cause value carried in the RRC connection resume request is a RAN notification area update (RAN notification area update), and the base station determines that there is no downlink data that needs to be sent to the terminal. In this case, the base station 2 sends the RRC connection release message to the terminal. The terminal receives the RRC connection release message.

The RRC connection release message may include a key of a second key area.

In an alternative manner of step S704, the base station 2 may send an RRC connection resume message to the terminal.

For example, the base station 2 determines that the terminal sends the RRC connection resume request because the terminal moves out of the RNA, that is, a cause value carried in the RRC connection resume request is a RAN notification area update, and the base station determines that there is downlink data that needs to be sent to the terminal. In this case, the base station 2 sends the RRC resume message to the terminal. The terminal receives the RRC connection resume message.

The RRC connection resume message may include a key of a second key area.

Further, when the base station 2 finds that there is no data that needs to be transmitted to the terminal (for example, the base station 2 sets a timer 1, and if there is no data that needs to be transmitted to the terminal before the timer 1 expires), the base station sends an RRC connection release message to the terminal. The terminal receives the RRC connection release message.

The RRC connection release message may include a key of a second key area.

S705: The base station obtains encrypted time information based on the key of the key area in which the base station is located and time information.

For implementation of this step, refer to step S101 in the embodiment shown in FIG. 5.

S706: The base station sends a first system information block, where the first system information block includes the encrypted time information.

Correspondingly, the terminal receives the first system information block.

For implementation of this step, refer to step S102 in the embodiment shown in FIG. 5.

S707: The terminal decrypts the encrypted time information based on the key.

For implementation of this step, refer to step S104 in the embodiment shown in FIG. 5.

According to the communications method provided in this embodiment of this application, the base station uses the system information block to carry the encrypted time information; a RAN in which the terminal is located changes; and the terminal obtains the key of the changed key area in an RRC connection resume procedure, and decrypts the encrypted time information based on the obtained key, to implement secure transmission of the time information.

The solutions provided in this application are described above mainly from a perspective of interaction between network elements. It may be understood that to implement the foregoing functions, the network elements include corresponding hardware structures and/or software modules for performing the functions. A person skilled in the art should be easily aware that units and algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

An embodiment of this application further provides a communications system, including the terminal, the base station (the first base station in the embodiment shown in FIG. 5, the base station in any one of the embodiments shown in FIG. 6 to FIG. 7b, the source base station or the target base station in either of the embodiments shown in FIG. 9 and FIG. 10, or the base station 1 or the base station 2 in either of the embodiments shown in FIG. 8 and FIG. 11), and the mobility management network element in the foregoing embodiment. In the communications system, the base station uses a system information block to carry encrypted time information, and the terminal decrypts the encrypted time information based on a key of a key area in which the terminal is located, to implement secure transmission of the time information.

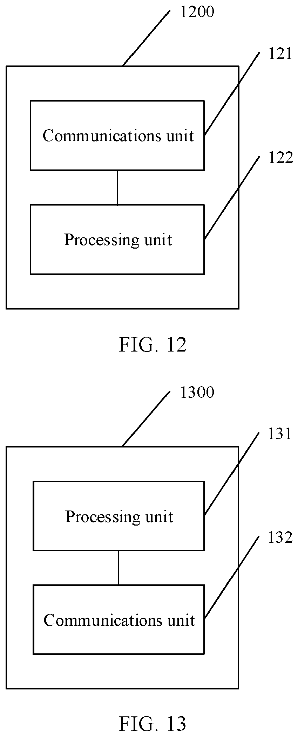

FIG. 12 is a schematic structural diagram of modules of a communications apparatus according to an embodiment of the present invention. The communications apparatus 1200 may be the foregoing terminal. The communications apparatus may be configured to perform the foregoing communications method. The communications apparatus may include:
a communications unit 121, configured to receive a first system information block from a first base station, where the first system information block includes encrypted time information, and the time information is used for synchronization of communications apparatuses in a key area in which the communications apparatus is located; and
a processing unit 122, configured to decrypt the encrypted time information based on a key of the key area in which the communications apparatus is located.

In a possible implementation, the processing unit 122 is further configured to obtain the key of the key area in which the terminal is located.

In another possible implementation, the processing unit 122 is configured to:
obtain, based on the first system information block, the key of the key area in which the communications apparatus is located; or
obtain a key of a second key area when the communications apparatus moves from a first key area to the second key area; or
receive, from the first base station, a second system information block that carries key-related information, and obtain, based on the key-related information, the key of the key area in which the communications apparatus is located.

In still another possible implementation, the processing unit 122 is configured to:
when the first system information block further includes key-related information, and the communications apparatus stores a key corresponding to the key-related information, obtain the stored key corresponding to the key-related information; or
when the first system information block further includes key-related information, and the communications apparatus does not store a key corresponding to the key-related information, obtain the key of the key area in which the terminal is located; or
when the communications apparatus fails to decrypt the encrypted time information based on a key stored in the communications apparatus, obtain the key of the key area in which the terminal is located.

In still another possible implementation, the communications unit 121 is configured to:
obtain the key of the second key area when the communications apparatus reselects a cell in the second key area from a cell in the first key area; or
obtain the key of the second key area when the communications apparatus is handed over from a source base station in the first key area to a target base station in the second key area; or
obtain the key of the second key area when the communications apparatus moves from a radio access network-based notification area RNAin the first key area to an RNA in the second key area.

In still another possible implementation, the communications unit 121 is configured to:
send a non-access stratum request message to a mobility management network element, and receive a non-access stratum response message from the mobility management network element, where the non-access stratum response message includes the key of the second key area; or
send a first RRC message to a second base station corresponding to the cell in the second key area, and receive a second RRC message from the second base station, where the second RRC message includes the key of the second key area.

In still another possible implementation, the communications apparatus is in a connected state, and when the communications apparatus is handed over from the source base station in the first key area to the target base station in the second key area, the communications unit 121 is configured to:
receive an RRC message from the source base station, where the RRC message includes the key of the second key area.

In still another possible implementation, the communications apparatus is in an inactive state, and when the communications apparatus moves from the RNA in the first key area to the RNA in the second key area, the communications unit 121 is configured to:
when the communications apparatus moves from the RNA in the first key area to a third base station in the RNA in the second key area, send an RRC connection resume request message to the third base station; and
receive an RRC connection release message from the third base station, where the RRC connection release message includes the key of the second key area.

In still another possible implementation, the first system information block is a system information block signed by using a certificate.

The communications unit 121 is further configured to receive the certificate from the mobility management network element or the first base station.

The processing unit 122 is further configured to verify a signature of the first system information block by using the certificate.

According to the communications apparatus provided in this embodiment of the present invention, the communications apparatus may be the foregoing terminal. The base station uses the system information block to carry the encrypted time information, and the terminal decrypts the encrypted time information based on the key of the key area in which the terminal is located, to implement secure transmission of the time information.

FIG. 13 is a schematic structural diagram of modules of a communications apparatus according to an embodiment of the present invention. The communications apparatus 1300 may be the foregoing first base station. The communications apparatus may be configured to perform the foregoing communications method. The communications apparatus may include:
a processing unit 131, configured to obtain encrypted time information based on time information and a key of a key area in which the communications apparatus is located, where the time information is used for synchronization of terminals in the key area; and
a communications unit 132, configured to send a first system information block, where the first system information block includes the encrypted time information.

In a possible implementation, the communications unit 132 is further configured to send the key to a terminal.

In another possible implementation, the communications unit 132 is configured to receive authorization indication information from a mobility management network element, where the authorization indication information is used to indicate that the terminal is authorized to use a time synchronization service; and is further configured to send the key to the terminal based on the authorization indication information.

In still another possible implementation, the communications apparatus is a target base station in a second key area, and the terminal is handed over from a source base station in a first key area to the target base station.

The communications unit 132 is configured to: receive a handover request message from the source base station, and send a handover command to the source base station, where the handover command includes the key, and the key is a key of the second key area.

Alternatively, the communications unit 132 is configured to: receive a handover request message from a mobility management network element, and send a handover request response message to the mobility management network element, where the handover request response message includes the key, and the key is a key of the second key area.

In still another possible implementation, the terminal moves from a radio access network-based notification area RNA in a first key area to the communications apparatus in a RAN in a second key area.

The communications unit 132 is configured to receive an RRC connection resume request message from the terminal.

The communications unit 132 is further configured to send an RRC connection release message to the terminal based on the RRC connection resume request message, where the RRC connection release message includes the key, and the key is a key of the second key area.

In still another possible implementation, the communications unit 132 is further configured to receive a certificate from an operation, administration, and maintenance entity or the mobility management network element; and the processing unit 131 is further configured to sign the first system information block by using the certificate.

According to the communications apparatus provided in this embodiment of the present invention, the communications apparatus may be the foregoing first base station. The first base station uses the system information block to carry the encrypted time information, and the terminal decrypts the encrypted time information based on the key of the key area in which the terminal is located, to implement secure transmission of the time information.

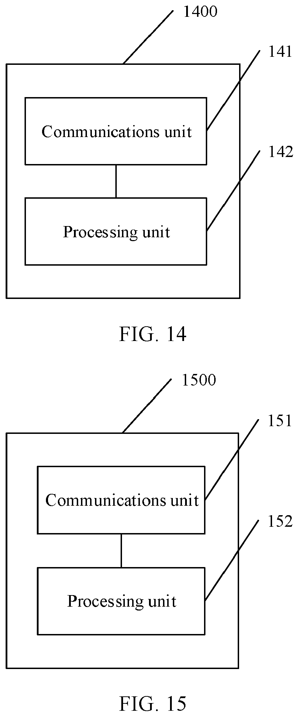

FIG. 14 is a schematic structural diagram of modules of a communications apparatus according to an embodiment of the present invention. The communications apparatus 1400 may be the foregoing mobility management network element. The communications apparatus may be configured to perform the foregoing communications method. The communications apparatus may include:
a communications unit 141, configured to receive a non-access stratum request message from a terminal.

The communications unit 141 is further configured to send a non-access stratum response message to the terminal, where the non-access stratum response message includes a key of a key area in which the terminal is located.

In a possible implementation, the communications apparatus further includes a processing unit 142.

The processing unit 142 is configured to obtain subscription information of the terminal based on the non-access stratum request message; and
is configured to: when determining, based on the subscription information, that the terminal is authorized to use a time synchronization service, encapsulate, by the mobility management network element, the key of the key area in which the terminal is located in the non-access stratum response message.

In this implementation, the mobility management network element sends the key to the terminal based on the subscription information of the terminal, and the terminal authorized to use the time synchronization service may obtain the key, to decrypt received time information, so as to effectively manage the terminal using the time synchronization service.

In another possible implementation, the communications unit 141 is further configured to receive the key from a first base station or an operation, administration, and maintenance entity.

According to the communications apparatus provided in this embodiment of the present invention, the communications apparatus may be the foregoing mobility management network element. The mobility management network element sends the key of the key area in which the terminal is located to the terminal, and the terminal decrypts the received encrypted time information based on the obtained key, to implement secure transmission of the time information.

FIG. 15 is a schematic structural diagram of modules of a communications apparatus according to an embodiment of the present invention. The communications apparatus 1500 may be the foregoing mobility management network element. The communications apparatus may be configured to perform the foregoing communications method. The communications apparatus may include:
a communications unit 151, configured to receive a non-access stratum request message from a terminal; and
a processing unit 152, configured to obtain subscription information of the terminal based on the non-access stratum request message.

When the mobility management network element determines, based on the subscription information, that the terminal is authorized to use a time synchronization service, the communications unit 151 is further configured to send authorization indication information to a first base station, where the authorization indication information is used to indicate that the terminal is authorized to use the time synchronization service.

According to the communications apparatus provided in this embodiment of the present invention, the communications apparatus may be the foregoing mobility management network element. The mobility management network element sends the key to the terminal based on the subscription information of the terminal, and the terminal authorized to use the time synchronization service may obtain the key, to decrypt received time information, so as to effectively manage the terminal using the time synchronization service.

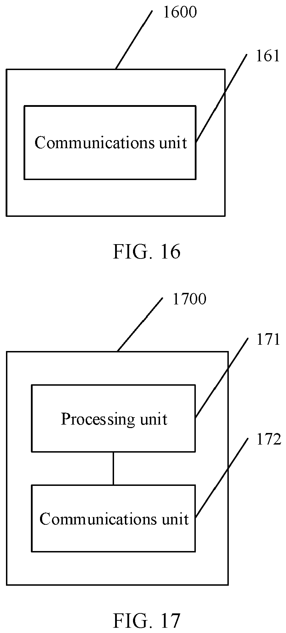

FIG. 16 is a schematic structural diagram of a module of a communications apparatus according to an embodiment of the present invention. The communications apparatus 1600 may be the foregoing mobility management network element. The communications apparatus may be configured to perform the foregoing communications method. The communications apparatus may include:
a communications unit 161, configured to receive a handover request message from a source base station.

The communications unit 161 is further configured to send the handover request message to a target base station.

The communications unit 161 is further configured to receive a handover request response message from the target base station, where the handover request response message includes a key of a key area in which the target base station is located.

The communications unit 161 is further configured to send a handover command message to the source base station, where the handover command message includes the key of the key area in which the target base station is located.

According to the communications apparatus provided in this embodiment of the present invention, the communications apparatus may be the foregoing mobility management network element. The key area changes with a base station handover. The terminal re-obtains a key of a key area in which the terminal is located, and the terminal decrypts received time information based on the key, to implement secure transmission of the time information.

FIG. 17 is a schematic structural diagram of modules of a communications apparatus according to an embodiment of the present invention. The communications apparatus 1700 may be the foregoing source base station. The communications apparatus may be configured to perform the foregoing communications method. The communications apparatus may include:
a processing unit 171, configured to obtain a key of a key area in which a target base station is located; and
a communications unit 172, configured to send, to a terminal, the key of the key area in which the target base station is located.

In a possible implementation, the communications unit 172 is configured to send a handover request message to the target base station; and the communications unit 172 is further configured to receive a handover command from the target base station, where the handover command includes the key of the key area in which the target base station is located.

In another possible implementation, the communications unit 172 is configured to send a handover request message to a mobility management network element; and the communications unit 172 is further configured to receive a handover command from the mobility management network element, where the handover command includes the key of the key area in which the target base station is located.

In still another possible implementation, the communications unit 172 is further configured to receive a key of a neighboring key area of the key area in which the target base station is located; and the communications unit 172 is further configured to send, to the terminal, the key of the neighboring key area of the key area in which the target base station is located.

In this implementation, the base station sends the key of the neighboring key area to the terminal in advance, so that during the cell reselection, the base station handover, or the RNA change, the terminal can directly obtain a key stored in the terminal, to decrypt time information.

According to the communications apparatus provided in this embodiment of the present invention, the communications apparatus may be the foregoing source base station. The key area changes with a base station handover. The terminal re-obtains a key of a key area in which the terminal is located.

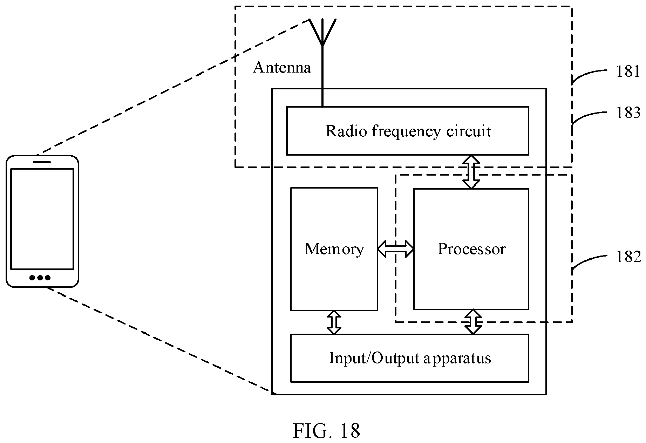

FIG. 18 is a simplified schematic structural diagram of a communications apparatus according to an embodiment of the present invention. The communications apparatus may be the foregoing terminal. The communications apparatus may be configured to perform the foregoing communications method. For ease of understanding and illustration, an example in which the terminal device is a mobile phone is used in FIG. 18. As shown in FIG. 18, the terminal device includes a processor, a memory, a radio frequency circuit, an antenna, and an input/output apparatus. The processor is mainly configured to: process a communications protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, such as a touchscreen, a display, or a keyboard, is mainly configured to: receive data entered by a user and output data to the user. It should be noted that some types of terminal devices may have no input/output apparatus.

When the processor needs to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 18 shows only one memory and one processor. An actual terminal device product may include one or more processors and one or more memories. The memory may also be referred to as a storage medium, a storage device, or the like. The memory may be disposed independent of the processor, or may be integrated into the processor. This is not limited in this embodiment of this application.

In this embodiment of this application, the antenna and the radio frequency circuit that have receiving and sending functions may be considered as a receiving unit and a sending unit (which may also be collectively referred to as a transceiver unit) of the terminal device, and the processor having a processing function may be considered as a processing unit of the terminal device. As shown in FIG. 18, the terminal device includes a receiving unit 181, a processing unit 182, and a sending unit 183. The receiving unit 181 may also be referred to as a receiver, a receiver, a receiving circuit, or the like, and the sending unit 183 may also be referred to as a transmitter, a transmitter, a transmitter, a transmitting circuit, or the like. The processing unit 182 may also be referred to as a processor, a processing board, a processing module, a processing apparatus, or the like. The receiving unit 181 and the sending unit 183 may also be collectively referred to as a communications unit.

For example, in an embodiment, the receiving unit 181 is configured to perform step S302 in the embodiment shown in FIG. 5, to receive the first system information block sent by the first base station, where the first system information block includes the encrypted time information. The processing unit 182 is configured to perform step S103 in the embodiment shown in FIG. 5, to decrypt the encrypted time information based on the key of the key area in which the terminal is located.

For details, refer to the descriptions in the method embodiments.

According to the communications apparatus provided in this embodiment of the present invention, the base station uses the system information block to carry the encrypted time information, and the terminal decrypts the encrypted time information based on the key of the key area in which the terminal is located, to implement secure transmission of the time information.

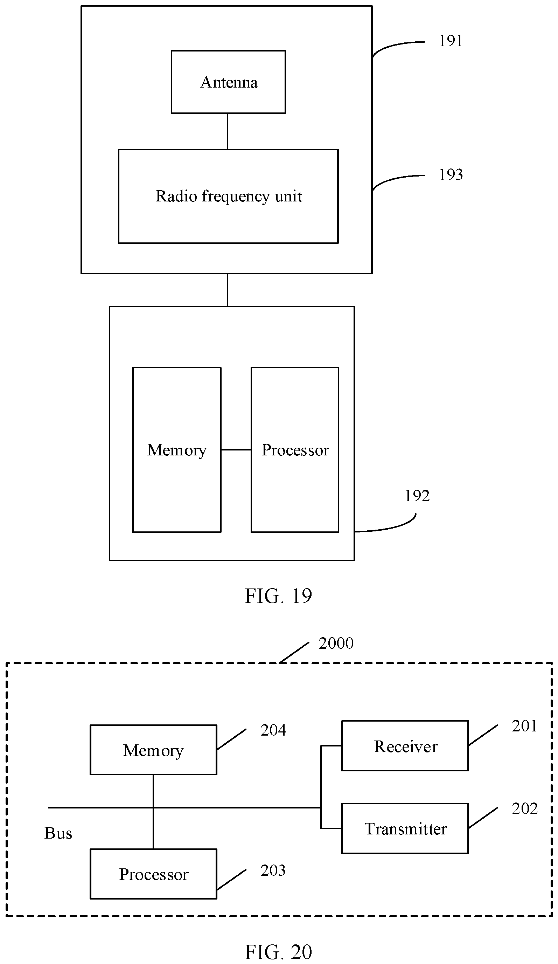

FIG. 19 is a simplified schematic structural diagram of a communications apparatus according to an embodiment of the present invention. The communications apparatus may be the foregoing first base station. The communications apparatus includes a part 192 and a part for radio frequency signal receiving/sending and conversion. The part for radio frequency signal receiving/sending and conversion further includes a receiving unit part 191 and a sending unit part 193 (which may also be collectively referred to as a communications unit). The part for radio frequency signal receiving/sending and conversion is mainly configured to: receive/send a radio frequency signal and perform conversion between a radio frequency signal and a baseband signal. The part 192 is mainly configured to: perform baseband processing, control the first base station, and the like. The receiving unit 191 may also be referred to as a receiver, a receiver, a receiving circuit, or the like, and the sending unit 193 may also be referred to as a transmitter, a transmitter, a transmitter, a transmitting circuit, or the like. The part 192 is usually a control center of the first base station, may be usually referred to as a processing unit, and is configured to control the first base station to perform the steps performed by the first base station in FIG. 5. For details, refer to the foregoing descriptions of the related parts.

The part 192 may include one or more boards. Each board may include one or more processors and one or more memories, and the processor is configured to: read and execute a program in the memory, to implement a baseband processing function and controlling of the first base station. If there are a plurality of boards, the boards may be interconnected to enhance a processing capability. In an optional implementation, alternatively, the plurality of boards may share one or more processors, or the plurality of boards share one or more memories, or the plurality of boards simultaneously share one or more processors.

For example, in an embodiment, the part 192 is configured to perform step S101 in the embodiment shown in FIG. 5; and the sending unit 193 is configured to perform step S102 in the embodiment shown in FIG. 5.

According to the communications apparatus provided in this embodiment of the present invention, the first base station uses the system information block to carry the encrypted time information, and the terminal decrypts the encrypted time information based on the key of the key area in which the terminal is located, to implement secure transmission of the time information.

FIG. 20 is a schematic architectural diagram of hardware of a communications apparatus according to an embodiment of the present invention. The communications apparatus 2000 may be the foregoing mobility management network element. The communications apparatus may be configured to perform the foregoing communications method. The communications apparatus may include a receiver 201, a transmitter 202, a processor 203, and a memory 204. The receiver 201, the transmitter 202, the processor 203, and the memory 204 are connected to each other through a communications line.

The memory includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory is configured to store a related instruction and related data.

The receiver is configured to receive data and/or a signal, and the transmitter is configured to send data and/or a signal. The transmitter and the receiver may be independent devices, or may be an integrated device.

The processor may include one or more processors, for example, includes one or more central processing units (central processing unit, CPU). When the processor is one CPU, the CPU may be a single-core CPU, or may be a multi-core CPU.

Specifically, in an embodiment, a related function implemented by the processing unit 142 in FIG. 14 may be implemented by the one or more processors, and a related function implemented by the communications unit 141 in FIG. 14 may be implemented by the receiver and the transmitter. The receiver 201 is configured to receive a non-access stratum request message from a terminal, and is further configured to send a non-access stratum response message to the terminal. The processor 203 is configured to obtain subscription information of the terminal based on the non-access stratum request message; and is configured to: when determining, based on the subscription information, that the terminal is authorized to use a time synchronization service, encapsulate, by the mobility management network element, a key of a key area in which the terminal is located in the non-access stratum response message.

In another embodiment, a related function implemented by the communications unit 151 in FIG. 15 may be implemented by the receiver and the transmitter, and a related function implemented by the processing unit 152 in FIG. 15 may be implemented by the one or more processors. The receiver 201 is configured to receive a non-access stratum request message from a terminal. The processor 203 is configured to obtain subscription information of the terminal based on the non-access stratum request message. The transmitter 202 is configured to: when the mobility management network element determines, based on the subscription information, that the terminal is authorized to use a time synchronization service, send authorization indication information to a first base station.

In still another embodiment, a related function implemented by the communications unit 161 in FIG. 16 may be implemented by the receiver and the transmitter. The receiver 201 is configured to receive a handover request message from a source base station. The transmitter 202 is configured to send the handover request message to a target base station. The receiver 201 is further configured to receive a handover request response message from the target base station, where the handover request response message includes a key of a key area in which the target base station is located. The transmitter 202 is further configured to send a handover command message to the source base station, where the handover command message includes the key of the key area in which the target base station is located.

For specific implementation, refer to the descriptions in the foregoing method embodiments.

According to the communications apparatus provided in this embodiment of the present invention, the mobility management network element sends the authorization indication to the base station based on the subscription information of the terminal, the base station sends, based on the authorization indication, the key of the key area in which the terminal is located to the terminal, and the terminal decrypts time information based on the key, to implement secure transmission of the time information.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing described system, apparatus, and unit, reference may be made to a corresponding process in the foregoing method embodiments. Details are not described herein again.

In the several embodiments provided in this application, it should be understood that the disclosed system, apparatus, and method may be implemented in another manner. For example, the foregoing described apparatus embodiment is merely an example. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions of the embodiments.

In addition, function units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of the present invention are completely or partially generated. The computer may be a general-purpose computer, a dedicated computer, a computer network, or another programmable apparatus. The computer instructions may be stored in a computer readable storage medium, or may be transmitted by using a computer readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

A person of ordinary skill in the art may understand that all or some of the procedures of the methods in the embodiments may be implemented by a computer program instructing related hardware. The program may be stored in a computer readable storage medium. When the program is executed, the procedures of the methods in the embodiments may be included. The foregoing storage medium includes any medium that can store program code, such as a read-only memory (read-only memory, ROM), a random access memory (random access memory, RAM), a magnetic disk, or an optical disc.

## Claims

1. A communications method, comprising:
receiving, by a terminal, a first system information block from a first base station, wherein the first system information block comprises encrypted time information, and the time information is used for synchronization of terminals in a key area in which the terminal is located; and
decrypting, by the terminal, the encrypted time information based on a key of the key area in which the terminal is located.

2. The method according to claim 1, wherein the method further comprises:
obtaining, by the terminal, the key of the key area in which the terminal is located.

3. The method according to claim 2, wherein the obtaining, by the terminal, the key of the key area in which the terminal is located comprises:
obtaining, by the terminal based on the first system information block, the key of the key area in which the terminal is located; or
obtaining, by the terminal, a key of a second key area when the terminal moves from a first key area to the second key area; or
receiving, by the terminal from the first base station, a second system information block that carries key-related information, and obtaining, based on the key-related information, the key of the key area in which the terminal is located.

4. The method according to claim 3, wherein the obtaining, by the terminal based on the first system information block, the key of the key area in which the terminal is located comprises:
when the first system information block further comprises key-related information, and the terminal stores a key corresponding to the key-related information, obtaining, by the terminal, the stored key corresponding to the key-related information; or
when the first system information block further comprises key-related information, and the terminal does not store a key corresponding to the key-related information, obtaining, by the terminal, the key of the key area in which the terminal is located; or
when the terminal fails to decrypt the encrypted time information based on a key stored in the terminal, obtaining, by the terminal, the key of the key area in which the terminal is located.

5. The method according to claim 3, wherein the obtaining, by the terminal, a key of a second key area when the terminal moves from a first key area to the second key area comprises:
obtaining, by the terminal, the key of the second key area when the terminal reselects a cell in the second key area from a cell in the first key area; or
obtaining, by the terminal, the key of the second key area when the terminal is handed over from a source base station in the first key area to a target base station in the second key area; or
obtaining, by the terminal, the key of the second key area when the terminal moves from a radio access network-based notification area RNA in the first key area to an RNA in the second key area.

6. The method according to claim 5, wherein the obtaining, by the terminal, the key of the second key area when the terminal reselects a cell in the second key area from a cell in the first key area comprises:
sending, by the terminal, a non-access stratum request message to a mobility management network element, and receiving a non-access stratum response message from the mobility management network element, wherein the non-access stratum response message comprises the key of the second key area; or
sending, by the terminal, a first RRC message to a second base station corresponding to the cell in the second key area, and receiving a second RRC message from the second base station, wherein the second RRC message comprises the key of the second key area.

7. The method according to claim 5, wherein the terminal is in a connected state, and the obtaining, by the terminal, the key of the second key area when the terminal is handed over from a source base station in the first key area to a target base station in the second key area comprises:
receiving, by the terminal, an RRC message from the source base station, wherein the RRC message comprises the key of the second key area.

8. The method according to claim 5, wherein the terminal is in an inactive state, and the obtaining, by the terminal, the key of the second key area when the terminal moves from an RNA in the first key area to an RNA in the second key area comprises:
when the terminal moves from the RNA in the first key area to a third base station in the RNA in the second key area, sending, by the terminal, an RRC connection resume request message to the third base station; and
receiving, by the terminal, an RRC connection release message from the third base station, wherein the RRC connection release message comprises the key of the second key area.

9. The method according to any one of claims 1 to 8, wherein the first system information block is a system information block signed by using a certificate, and the method further comprises:
receiving, by the terminal, the certificate from the mobility management network element or the first base station; and
verifying, by the terminal, a signature of the first system information block by using the certificate.

10. A communications method, comprising:
obtaining, by a first base station, encrypted time information based on time information and a key of a key area in which the first base station is located, wherein the time information is used for synchronization of terminals in the key area; and
sending, by the first base station, a first system information block, wherein the first system information block comprises the encrypted time information.

11. The method according to claim 10, wherein the method further comprises:
sending, by the first base station, the key to a terminal.

12. The method according to claim 11, wherein the sending, by the first base station, the key to a terminal comprises:
receiving, by the first base station, authorization indication information from a mobility management network element, wherein the authorization indication information is used to indicate that the terminal is authorized to use a time synchronization service; and
sending, by the first base station, the key to the terminal based on the authorization indication information.

13. The method according to claim 11, wherein the first base station is a target base station in a second key area, the terminal is handed over from a source base station in a first key area to the target base station, and the sending, by the first base station, the key to a terminal comprises:
receiving, by the first base station, a handover request message from the source base station, and sending a handover command to the source base station, wherein the handover command comprises the key, and the key is a key of the second key area; or
receiving, by the first base station, a handover request message from a mobility management network element, and sending a handover request response message to the mobility management network element, wherein the handover request response message comprises the key, and the key is a key of the second key area.

14. The method according to claim 11, wherein the terminal moves from a radio access network-based notification area RNA in a first key area to the first base station in a RAN in a second key area, and the sending, by the first base station, the key to a terminal comprises:
receiving, by the first base station, an RRC connection resume request message from the terminal; and
sending, by the first base station, an RRC connection release message to the terminal based on the RRC connection resume request message, wherein the RRC connection release message comprises the key, and the key is a key of the second key area.

15. The method according to any one of claims 10 to 14, wherein the method further comprises:
receiving, by the first base station, a certificate from an operation, administration, and maintenance entity or the mobility management network element; and
signing, by the first base station, the first system information block by using the certificate.

16. A communications apparatus, comprising:
a communications unit, configured to receive a first system information block from a first base station, wherein the first system information block comprises encrypted time information, and the time information is used for synchronization of communications apparatuses in a key area in which the communications apparatus is located; and
a processing unit, configured to decrypt the encrypted time information based on a key of the key area in which the communications apparatus is located.

17. The communications apparatus according to claim 16, wherein the processing unit is further configured to obtain the key of the key area in which the terminal is located.

18. The communications apparatus according to claim 17, wherein the processing unit is configured to:
obtain, based on the first system information block, the key of the key area in which the communications apparatus is located; or
obtain a key of a second key area when the communications apparatus moves from a first key area to the second key area; or
receive, from the first base station, a second system information block that carries key-related information, and obtain, based on the key-related information, the key of the key area in which the communications apparatus is located.

19. The communications apparatus according to claim 18, wherein the processing unit is configured to:
when the first system information block further comprises key-related information, and the communications apparatus stores a key corresponding to the key-related information, obtain the stored key corresponding to the key-related information; or
when the first system information block further comprises key-related information, and the communications apparatus does not store a key corresponding to the key-related information, obtain the key of the key area in which the terminal is located; or
when the communications apparatus fails to decrypt the encrypted time information based on a key stored in the communications apparatus, obtain the key of the key area in which the terminal is located.

20. The communications apparatus according to claim 18, wherein the communications unit is configured to:
obtain the key of the second key area when the communications apparatus reselects a cell in the second key area from a cell in the first key area; or
obtain the key of the second key area when the communications apparatus is handed over from a source base station in the first key area to a target base station in the second key area; or
obtain the key of the second key area when the communications apparatus moves from a radio access network-based notification area RNA in the first key area to an RNA in the second key area.

21. The communications apparatus according to claim 20, wherein the communications unit is configured to:
send a non-access stratum request message to a mobility management network element, and receive a non-access stratum response message from the mobility management network element, wherein the non-access stratum response message comprises the key of the second key area; or
send a first RRC message to a second base station corresponding to the cell in the second key area, and receive a second RRC message from the second base station, wherein the second RRC message comprises the key of the second key area.

22. The communications apparatus according to claim 20, wherein the communications apparatus is in a connected state, and when the communications apparatus is handed over from the source base station in the first key area to the target base station in the second key area, the communications unit is configured to:
receive an RRC message from the source base station, wherein the RRC message comprises the key of the second key area.

23. The communications apparatus according to claim 20, wherein the communications apparatus is in an inactive state, and when the communications apparatus moves from the RNA in the first key area to the RNA in the second key area, the communications unit is configured to:
when the communications apparatus moves from the RNA in the first key area to a third base station in the RNA in the second key area, send an RRC connection resume request message to the third base station; and
receive an RRC connection release message from the third base station, wherein the RRC connection release message comprises the key of the second key area.

24. The communications apparatus according to any one of claims 16 to 23, wherein the first system information block is a system information block signed by using a certificate;
the communications unit is further configured to receive the certificate from the mobility management network element or the first base station; and
the processing unit is further configured to verify a signature of the first system information block by using the certificate.

25. A communications apparatus, comprising:
a processing unit, configured to obtain encrypted time information based on time information and a key of a key area in which the communications apparatus is located, wherein the time information is used for synchronization of terminals in the key area; and
a communications unit, configured to send a first system information block, wherein the first system information block comprises the encrypted time information.

26. The communications apparatus according to claim 25, wherein the communications unit is further configured to send the key to a terminal.

27. The communications apparatus according to claim 26, wherein the communications unit is configured to receive authorization indication information from a mobility management network element, wherein the authorization indication information is used to indicate that the terminal is authorized to use a time synchronization service; and is further configured to send the key to the terminal based on the authorization indication information.

28. The communications apparatus according to claim 26, wherein the communications apparatus is a target base station in a second key area, and the terminal is handed over from a source base station in a first key area to the target base station;
the communications unit is configured to: receive a handover request message from the source base station, and send a handover command to the source base station, wherein the handover command comprises the key, and the key is a key of the second key area; or
the communications unit is configured to: receive a handover request message from a mobility management network element, and send a handover request response message to the mobility management network element, wherein the handover request response message comprises the key, and the key is a key of the second key area.

29. The communications apparatus according to claim 26, wherein the terminal moves from a radio access network-based notification area RNA in a first key area to the communications apparatus in a RAN in a second key area;
the communications unit is configured to receive an RRC connection resume request message from the terminal; and
the communications unit is further configured to send an RRC connection release message to the terminal based on the RRC connection resume request message, wherein the RRC connection release message comprises the key, and the key is a key of the second key area.

30. The communications apparatus according to any one of claims 25 to 29, wherein
the communications unit is further configured to receive a certificate from an operation, administration, and maintenance entity or the mobility management network element; and
the processing unit is further configured to sign the first system information block by using the certificate.
